# EUROPÄISCHE PATENTANMELDUNG

(11) **EP 3 150 418 A1**
(43) Veröffentlichungstag der Anmeldung: **05.04.2017**
(21) Anmeldenummer: 15187809.7
(22) Anmeldetag: 30.09.2015
(51) Int. Cl.: B60K 17/10, F16H 61/4035, F16H 61/444, F16H 61/47

(54) **RAD-STRASSENFERTIGER UND VERFAHREN ZUM BETRIEB EINES RAD-STRASSENFERTIGERS**

(71) Anmelder: Ammann Schweiz AG, 4901 Langenthal (CH)
(72) Erfinder: Giovanoli, Lino, 4912 Aarwangen (CH)
(74) Vertreter: Dittmann, Rolf

(57) **Zusammenfassung**

Beschrieben ist ein Rad-Strassenfertiger (1), der wenigstens zwei antreibbare Räder (101, 102, 103, 201, 202, 203) umfasst, wobei jedes antreibbare Rad mit einer Rad-Antriebseinheit (111, 112, 113, 211, 212, 213) gekoppelt ist, und der weiterhin wenigstens eine Fahr-Hydraulikanordnung (100, 200) zum Antrieb des Strassenfertigers umfasst, in der wenigstens zwei Rad-Antriebseinheiten in hydraulischer Parallelschaltung in jeweils einem Strömungsweg angeordnet sind, wodurch wenigstens zwei hydraulisch parallel geschaltete Strömungswege gebildet sind. In wenigstens einem der hydraulisch parallel geschalteten Strömungswege sind eine Rad-Antriebseinheit (112, 113) und ein verstellbares Drosselorgan in einer Reihenschaltung angeordnet. Wenigstens in einem der hydraulisch parallel angeordneten Strömungswege ist eine Hinterrad-Antriebseinheit (111, 211) für ein Hinterrad (101, 201) und in wenigstens einem der hydraulisch parallel angeordneten Strömungswege eine Vorderrad-Antriebseinheit (112, 113, 212, 213) für ein Vorderrad (102, 103, 201, 203) angeordnet. Bei Traktionsverlust eines Rades wird der die entsprechende Rad-Antriebseinheit durchströmende Volumenstrom gedrosselt.

## Beschreibung

### TECHNISCHES GEBIET

Die vorliegende Beschreibung betrifft einen Rad-Strassenfertiger der im Anspruch 1 beschriebenen Art. Sie betrifft weiterhin ein Verfahren zum Betrieb eines Rad-Strassenfertigers.

### TECHNOLOGISCHER HINTERGRUND

Aus dem Stand der Technik sind Rad-Strassenfertiger bekannt, bei denen sowohl die Hinterräder als auch wenigstens ein Teil der Vorderräder antreibbar ist. Dabei ist üblicherweise eine hydrostatische Antriebseinheit mit jedem antreibbaren Rad gekoppelt. Im Betrieb muss sichergestellt werden, dass die Drehzahlen der antreibbaren Räder unter Berücksichtigung unterschiedlicher Abrollumfänge zueinander passen.

Aus der EP 1 245 425 ist ein Radfertiger bekannt geworden, bei dem die Antriebseinheiten aller Hinterräder und diejenigen aller Vorderräder jeweils in einer getrennten Fahr-Hydraulikanordnung angeordnet sind und mit jeweils einer Pumpe für die Hinterräder und einer Pumpe für die Vorderräder betrieben werden. Die dort beschriebene Anordnung bedarf einer komplexen Regelung des Drehmoments und der Drehzahl der Räder. In der Fahr-Hydraulikanordnung sind hier zu aufwändige Druckregelsysteme erforderlich.

In der DE 10 2010 014 901 ist ein Rad-Strassenfertiger beschrieben, bei dem die Rad-Antriebseinheiten aller antreibbaren Vorderräder des Rad-Strassenfertigers in einem gemeinsamen Hydraulikkreis angeordnet sind. Die Antriebseinheiten der Hinterräder sind in einem separaten Hydraulikkreis angeordnet. Die Antriebseinheiten der Vorderräder sind in einer hydraulischen Parallelschaltung angeordnet. Jeder Vorderrad-Antriebseinheit ist ein verstellbares Drosselorgan in Form eines 2/2-Proportional-Wegeventils zugeordnet und mit der Antriebseinheit in Reihe geschaltet. Die Versorgung der Vorderrad-Antriebseinheiten erfolgt über eine Lastregel-, Load Sensing (LS), Pumpe. Bei dem dort beschriebenen Fertiger ist ein erheblicher Aufwand erforderlich, um die Drücke in den Hydraulikkreisen für die Vorderrad-Antriebseinheiten und die Hinterrad-Antriebseinheiten und somit das von den Vorderrädern und den Hinterrädern aufgebrachte Drehmoment abzugleichen. Die Drehzahl der Vorderräder wird aufwendig geregelt, indem der Volumenstrom des Hydraulikfluids, der der Rad-Antriebseinheit zufliesst, geregelt wird.

### DARSTELLUNG DES GEGENSTANDES DER VORLIEGENDEN BESCHREIBUNG

Vorliegend sind ein Rad-Strassenfertiger und ein Verfahren der eingangs genannten Art angegeben. Gemäss einem Aspekt der vorliegenden Beschreibung ist ein Rad-Strassenfertiger angegeben, bei dem sowohl Vorder- als auch Hinterräder über hydraulische Rad-Antriebseinheiten angetrieben werden. Die Rad-Antriebseinheiten sind insbesondere hydrostatische Antriebseinheiten. Der Strassenfertiger und das Verfahren sollen weiterhin derart angegeben werden, dass eine gute Traktion gewährleistet ist. Der Strassenfertiger und das Verfahren sollen derart angegeben sein, dass auf einfache Weise ein Abgleich zwischen den Abroll-Umfangsgeschwindigkeiten der angetriebenen Räder und eine günstige Verteilung des Antriebsdrehmoments bzw. der Zugkraft auf die angetriebenen Räder erfolgt. Der Rad-Strassenfertiger und das Verfahren sollen weiterhin derart angegeben werden, dass beim Traktionsverlust eines Rades ein Durchdrehen dieses Rades unterbunden wird.

Weitere Wirkungen und Vorteile der hier beschriebenen Gegenstände, ob explizit angegeben oder nicht, ergeben sich im Lichte der vorliegenden Beschreibung.

Dies wird mittels der im Anspruch 1 angegebenen Vorrichtung wie auch mittels des weiterhin angegebenen Verfahrens erreicht.

Beschrieben ist demnach ein Rad-Strassenfertiger, der wenigstens zwei antreibbare Räder umfasst, wobei jedes antreibbare Rad mit wenigstens einer und beispielsweise genau einer Rad-Antriebseinheit gekoppelt ist. Der Strassenfertiger umfasst weiterhin wenigstens eine Fahr-Hydraulikanordnung zum Antrieb des Strassenfertigers. In der Fahr-Hydraulikanordnung sind wenigstens zwei Rad-Antriebseinheiten in hydraulischer Parallelschaltung in jeweils einem Strömungsweg angeordnet, derart, dass wenigstens zwei hydraulisch parallel geschaltete Strömungswege gebildet sind. Wenigstens in einem der hydraulisch parallel angeordneten Strömungswege sind eine Rad-Antriebseinheit und ein verstellbares Drosselorgan in einer Reihenschaltung angeordnet. Dabei ist in wenigstens einem der hydraulisch parallel angeordneten Strömungswege eine Hinterrad-Antriebseinheit für ein Hinterrad des Rad-Strassenfertigers und in wenigstens einem der hydraulisch parallel angeordneten Strömungswege eine Vorderrad-Antriebseinheit für ein Vorderrad des Rad-Strassenfertigers angeordnet.

Insbesondere umfasst der Rad-Strassenfertiger an jeder Seite genau ein antreibbares Hinterrad und wenigstens ein antreibbares Vorderrad.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine", hingewiesen wird.

Es versteht sich, dass eine Vorderrad-Antriebseinheit mechanisch mit einem Vorderrad und eine Hinterrad-Antriebseinheit mechanisch mit einem Hinterrad gekoppelt sind, wobei durchaus ein Getriebe zwischen einer Antriebseinheit und dem Rad angeordnet sein kann. Eine Rad-Antriebseinheit bildet mit dem zugehörigen Rad und gegebenenfalls weiteren gekoppelten und/oder zwischengeschalteten Komponenten, wie beispielsweise einem zwischen dem Rad und der Rad-Antriebseinheit angeordneten Getriebe, einen Rad-Antriebsstrang.

Das verstellbare Drosselorgan ist in bestimmten Ausgestaltungen des beschriebenen Gegenstandes ein 2/2-Wege-Proportionalventil.

Aufgrund der Anordnung einer Hinterrad-Antriebseinheit und einer Vorderrad-Antriebseinheit in Parallelschaltung erübrigt sich eine aufwändige Regelung und ein Abgleich der Fahrhydraulik-Teilvolumenströme für die Antriebseinheiten von Vorder- und Hinterrädern. Im Betrieb sind die Vorder- und Hinterräder über den Untergrund miteinander gekoppelt, solange beide ausreichend Traktion aufweisen. Dadurch stellt sich automatisch ein Drehzahlverhältnis zwischen den Rädern bzw. den Antriebseinheiten ein, das aus dem Verhältnis der Rad-Abrollumfänge resultiert. Damit ist auch ein Verhältnis der Teilvolumenströme in den parallel geschalteten Strömungswegen, sofern diese mit Hydraulikfluid beaufschlagt werden, festgelegt. Die hydraulische Parallelschaltung der Antriebseinheiten wirkt in diesem Sinne wie ein Differential, so, dass jeder Antriebseinheit automatisch der Volumenstrom zuströmt, der für die aktuelle, beispielsweise durch die Fahrgeschwindigkeit, den Abrollumfang des Rades und gegebenenfalls einen Lenkwinkel oder Kurvenradius, aber auch durch das Abrollen über Unebenheiten, vorgegebene, Drehzahl erforderlich ist. Aktive Regeleingriffe für die Zuteilung der Teilvolumenströme zu den Antriebseinheiten sind hierzu, solange alle Räder Traktion haben, nicht erforderlich. Im Übrigen erübrigt sich aufgrund der hydraulisch parallelen Anordnung von Vorderrädern und Hinterrädern eine aufwendige Drucksteuerung zur Einstellung eines von den Vorderrädern aufgebrachten Drehmoments. Aufgrund der Differentialwirkung der hydraulischen Parallelanordnung von Hinterrad- und Vorderrad-Antriebseinheiten in einer Fahr-Hydraulikanordnung wird das vom Antrieb aufgebrachte Drehmoment bzw. die Zugkraft stets angemessen auf die Hinterräder und die angetriebenen Vorderräder verteilt.

Verliert allerdings eines der Räder die Traktion, würde das entsprechende Rad schneller drehen, und es würde eine mit diesem Rad gekoppelte Rad-Antriebseinheit einen grösseren Volumenstrom durchsetzen. Im Extremfall, in dem ein angetriebenes Rad frei und ohne Kontakt mit dem Untergrund dreht, würde praktisch der gesamte Fahrhydraulik-Volumenstrom, oder wenigstens ein grosser Teil davon, durch die Antriebseinheit dieses Rades strömen, während für die Antriebseinheiten der anderen Räder, die noch Traktion haben, kein Volumenstrom mehr zur Verfügung stünde. Um dies zu verhindern, wird der Rad-Strassenfertiger gemäss einem Aspekt der vorliegenden Beschreibung nach einem Verfahren betrieben, welches umfasst, einen gemeinsamen Fahrhydraulik-Volumenstrom für wenigstens eine Vorderrad-Antriebseinheit und wenigstens eine Hinterrad-Antriebseinheit bereitzustellen, wenigstens ein Vorderrad und ein Hinterrad anzutreiben, indem Fahrhydraulik-Teilvolumenströme durch die Rad-Antriebseinheiten des wenigstens einen angetriebenen Vorderrads und des wenigstens einen Hinterrads geleitet werden, eine Ist-Drehzahl an wenigstens einem Rad-Antriebsstrang zu ermitteln, wobei ein Rad-Antriebsstrang wenigstens eine Rad-Antriebseinheit und ein mit der Rad-Antriebseinheit gekoppeltes Rad umfasst, eine Referenz-Soll-Drehzahl für den Rad-Antriebsstrang zu ermitteln, und im Falle einer Abweichung von Ist-Drehzahl und Referenz-Solldrehzahl an einem Rad-Antriebsstrang, die grösser ist als ein Toleranzwert, auf den Fahrhydraulik-Teilvolumenstrom einer Rad-Antriebseinheit dieses Antriebsstrangs einzuwirken und insbesondere diesen zu reduzieren.

Unter der Referenz-Solldrehzahl eines Antriebsstrangs ist hierbei zunächst eine Drehzahl zu verstehen, mit der ein an dem Antriebsstrang angeordnetes Rad bei einer vorgegebenen Fahrgeschwindigkeit der Strassenfertigers schlupffrei auf dem Untergrund abrollt. Diese ist unter anderem von der Fahrgeschwindigkeit des Fertigers, und gegebenenfalls, insbesondere bei Kurvenfahrt, von der Position der Position des Rades am Fertiger und dem Kurvenradius oder einem Lenkwinkel abhängig.

Wenn beispielsweise davon ausgegangen werden kann, dass ein bestimmtes Rad zuletzt die Traktion auf dem Untergrund verliert, so kann die Drehzahl am entsprechenden Antriebsstrang als ein Parameter herangezogen werden, der die Fahrgeschwindigkeit abbildet.

Wenn kein Parameter zur Verfügung steht, der die Fahrgeschwindigkeit hinreichend zuverlässig und genau abbildet, kann zur Ermittlung der Referenz-Solldrehzahl an einem Antriebsstrang auf die Drehzahl eines als Referenz herangezogenen Referenz-Antriebsstrangs zurückgegriffen werden. So kann gemäss beispielhafter Ausgestaltungen des Verfahrens davon ausgegangen werden, dass, aufgrund des vorgegebenen und weitgehend konstanten und nur innerhalb vergleichsweise enger Grenzen variablen Rad-Abrollumfangs der an den Antriebssträngen angeordneten Räder, stets ein zumindest näherungsweise gleichbleibendes Verhältnis zwischen den Drehzahlen an den einzelnen Antriebssträngen vorliegt, wenn alle Räder schlupffrei auf dem Untergrund abrollen. Selbstverständlich muss auch hier der Lenkwinkel einberechnet werden, da die Räder bei Kurvenfahrt auf unterschiedlichen Radien und somit auf unterschiedlich grossen Bahnkurven abrollen. Damit ist ein Referenz-Drehzahlverhältnis zwischen den Drehzahlen an den verschiedenen Antriebssträngen vorgegeben, wobei auch hier beispielsweise ein Lenkwinkel zu berücksichtigen ist. Ausgehend von einer Referenz-Ist-Drehzahl an dem als Referenz herangezogenen Antriebsstrang wird auf Grundlage der Referenz-Drehzahlverhältnisse und einer Ist-Drehzahl am Referenz-Antriebsstrang somit die Referenz-Solldrehzahl an einem anderen Antriebsstrang bestimmt.

Auf die Bestimmung des Antriebsstrangs, der als Referenz-Antriebsstrang herangezogen wird, wird unten näher eingegangen.

Ein Referenz-Drehzahlverhältnis und/oder die Referenz-Drehzahlen für Geradeausfahrt können aufgrund der Rad-Abrollumfänge der an den verschiedenen Antriebssträngen angeordneten Räder fest vorgegeben werden, wie vorstehend beschrieben. Wie unten beschrieben, ist es auch möglich, die Referenz-Drehzahlverhältnisse zwischen den einzelnen Antriebssträngen zu kalibrieren oder dynamisch zu bestimmen.

In jedem Falle sind aber die unterschiedlichen Bahnkurven von Vorder- und Hinterrädern bei Kurvenfahrt zu berücksichtigen.

Insofern umfasst das vorliegend beschriebene Verfahren zum Betrieb eines Strassenfertigers in einer Ausgestaltung, zur Ermittlung der Referenz-Solldrehzahl in einem Antriebsstrang wenigstens eine der folgenden Grössen heranzuziehen: eine Fahrgeschwindigkeit und/oder ein Rad-Abrollumfang und/oder ein Lenkwinkel.

Die Ist-Drehzahl an einem Antriebsstrang kann einerseits mittels geeigneter Sensoren direkt gemessen werden. Es versteht sich weiterhin, dass im Falle hydrostatischer Rad-Antriebseinheiten die Ist-Drehzahl an einem Rad-Antriebsstrang fest mit dem Fahrhydraulik-Teilvolumenstroms des daran angeordneten Rad-Antriebsmotors gekoppelt ist. Eine Ist-Drehzahl an einem Rad-Antriebsstrang kann daher auch indirekt ermittelt werden, indem der Fahrhydraulik-Teilvolumenstrom und/oder ein Druckabfall über eine in dem entsprechenden parallel geschalteten Strömungsweg angeordnete Blende gemessen wird. Dies eignet sich insbesondere dann, wenn keine Ist-Drehzahl als Absolutwert sondern relativ zu einer Drehzahl in einem anderen Antriebsstrang bestimmt werden soll. In diesem Falle können beispielsweise Druckverlustwerte über in den parallel geschalteten Strömungswegen angeordneten Blenden verglichen werden.

Der Eingriff auf einen Teil-Volumenstrom erfolgt insbesondere mittels des oben beschriebenen verstellbaren Drosselorgans, das in dem entsprechenden der oben beschriebenen parallel geschalteten Strömungswege angeordnet ist. Mit diesem kann der Fahrhydraulik-Teilvolumenstrom eines durchdrehenden Rades gedrosselt werden.

Wie bereits erwähnt, erfordert die Aufteilung des Fahrhydraulik-Volumenstroms auf die Rad-Antriebseinheiten in einem Normalbetrieb, in dem alle Räder Traktion haben, also reibschlüssig mit dem Untergrund gekoppelt sind, kein aktives Eingreifen in die Aufteilung des Fahrhydraulik-Volumenstroms auf die Hinterrad- und die Vorderrad-Antriebseinheiten. Jede Rad-Antriebseinheit schluckt aufgrund der Kopplung der Räder durch den Untergrund automatisch eben den Teilvolumenstrom, der sich aufgrund der aktuellen Fahrgeschwindigkeit, dem Rad-Abrollumfang, gegebenenfalls einem Übersetzungsverhältnis zwischen dem Rad und der Rad-Antriebseinheit, dem Schluckvolumen der Rad-Antriebseinheit pro Umdrehung der Rad-Antriebseinheit, sowie gegebenenfalls einem Rad-Bahnradius bei Kurvenfahrt, ergibt. Im Falle, dass ein Rad die Traktion verliert, kann dies durch den Anstieg einer Drehzahl im entsprechenden Rad-Antriebsstrang festgestellt werden. Die erhöhte Drehzahl bedeutet einen Anstieg des entsprechenden Fahrhydraulik-Teilvolumenstroms. Der Fahrhydraulik-Teilvolumenstrom für den Antrieb eben dieses Antriebsstrangs wird gedrosselt. Damit wird bewirkt, dass für die Antriebseinheiten der Räder, die nach wie vor Traktion haben, auch weiterhin Fahrhydraulik-Teilvolumenströme zur Verfügung stehen. Somit können die Räder, die weiterhin Traktion haben, auch beim Traktionsverlust eines oder mehrerer Räder ein Drehmoment und eine Zugkraft zum Antrieb des Strassenfertigers aufbringen. Mit anderen Worten, wenn die mechanische Kopplung der Antriebsräder, deren Antriebseinheiten in einer gemeinsamen Fahr-Hydraulikanordnung angeordnet sind, über den Untergrund nicht mehr gegeben ist, wird über die Steuerung der Fahrhydraulik eingegriffen und durch eine selektive Drosselung wenigstens eines einzelnen Fahrhydraulik-Teilvolumenstroms die Kopplung wieder hergestellt. Dies wirkt sozusagen als hydraulische Differentialsperre.

Es kann vorgesehen sein, dass der Regeleingriff erst erfolgt, wenn die Abweichung zwischen der Referenz-Solldrehzahl und der Ist-Drehzahl über eine gewisse tolerierte Abweichung gestiegen ist. Gewisse Abweichungen von der Referenz-Solldrehzahl ohne Traktionsverlust ergeben sich beispielsweise durch unterschiedliche Reifendrücke oder Reifenverschleiss der Räder, oder beim Abrollen über Unebenheiten. Wie unten noch ausgeführt wird, kann diesen Effekten durch eine Kalibration der Referenz-Solldrehzahlen bzw. eines Referenz-Sollverhältnisses der Drehzahlen an verschiedenen Antriebssträngen Rechnung getragen werden. Gegebenenfalls kann ein gewisser zulässiger Antriebsschlupf zur Übertragung einer maximalen Zugkraft sogar erwünscht sein. Insofern kann es sich als zweckmässig erweisen, ein Toleranzband der Abweichung von Referenz-Solldrehzahl und Ist-Drehzahl festzulegen, innerhalb dessen die Steuerung eines Teilvolumenstroms nicht aktiv wird. Wie ein derartiges Toleranzband festzulegen ist, weiss der Fachmann aufgrund seines Fachwissens und gegebenenfalls aufgrund von einfachen Versuchen ohne weiteres festzulegen. Es kann dies dabei eine absolute Toleranz der Drehzahl sein, oder eine zulässige relative Abweichung von Referenz-Soll- und Ist-Drehzahl.

Es kann weiterhin vorgesehen sein, dass ein Steuereingriff erst dann erfolgt, wenn die Drehzahlabweichung über einen gewissen Zeitraum besteht. Auch hier vermag der Fachmann ohne weiteres festzulegen, wie gross diese Zeitspanne sein darf, um ein gewünschtes Verhalten des Antriebs zu erreichen. Es kann davon ausgegangen werden, dass dieser Zeitraum im Bereich von einigen Zehntelsekunden bis Sekunden liegt.

Es kann vorgesehen sein, dass ebenso ein Gradient des Drehzahlanstiegs ausgewertet wird.

Es kann vorgesehen sein, dass der Steuereingriff erfolgt, nachdem eines oder mehrere der genannten Kriterien, gegebenenfalls hierarchisch geordnet, erfüllt sind, so, dass beispielsweise bei einem schnellen Drehzahlanstieg ein Eingriff früher oder bei einer geringeren Soll-Ist-Abweichung erfolgt als bei einem vergleichsweise langsamen Drehzahlanstieg.

Beispielsweise kann eine PI- oder PID-Regelung der Drehzahl eines Antriebsstrangs vorgesehen sein.

Aufgrund der genannten regelungstechnischen Massnahmen kann ein Aufschwingen des Regelkreises bzw. ein hyperaktives Agieren der Volumenstromsteuerung vermieden werden, wobei die Aufzählung oben nicht abschliessend zu verstehen ist.

Insbesondere erfolgt der Eingriff auf die Fahr-Hydraulikanordnung ausschliesslich dann, wenn ein vollständiger oder teilweiser Traktionsverlust eines Rades vorliegt. Insbesondere wird, sobald das entsprechende Rad oder die entsprechenden Räder wieder Traktion haben, der Steuereingriff auf den entsprechenden Fahrhydraulik-Teilvolumenstrom wieder aufgehoben. Beispielsweise wird dann ein verstellbares Drosselorgan, welches mit einer Rad-Antriebseinheit des entsprechenden Antriebsstrangs in Reihe geschaltet ist, wieder vollständig geöffnet.

Gemäss einer Ausgestaltung des Verfahrens wird der Fahrhydraulik-Teilvolumenstrom eines Rades oder der Räder mit Traktionsverlust so weit gedrosselt, dass die ermittelte Drehzahl wieder der Referenz-Solldrehzahl entspricht. Damit ist sichergestellt, dass die Fahrhydraulik-Teilvolumenströme, die durch die Antriebseinheiten aller innerhalb der Hydraulikanordnung betriebenen Räder strömen, wieder so gross sind, wie es einer gewünschten und eingestellten Fahrgeschwindigkeit entspricht. Die Wiederherstellung der Traktion kann in diesem Falle beispielweise dadurch ermittelt werden, dass zyklisch auf die Steuerung des entsprechenden Fahrhydraulik-Teilvolumenstroms eingegriffen wird, und beobachtet wird, wie die Drehzahl im Antriebsstrang hierauf reagiert. Bleibt die Soll-Ist-Abweichung bei Null, oder innerhalb eines Toleranzbandes, wie es oben beschrieben wurde, so kann dies als Zeichen gewertet werden, dass wieder Traktion hergestellt ist. Der Steuereingriff kann dann beendet werden, und insbesondere kann die Durchströmung der Antriebseinheit wieder vollkommen freigegeben werden.

Gemäss einer weiteren Ausgestaltung des Verfahrens erfolgt der Steuereingriff derart, dass die tatsächliche Regel-Solldrehzahl eines Rades mit Traktionsverlust auf eine gewisse Abweichung von der Referenz-Solldrehzahl und insbesondere grösser als die Referenz-Solldrehzahl eingestellt wird. Dabei ist die genannte Abweichung in einer weiteren Ausgestaltung des Verfahrens grösser als das oben genannte Toleranzband. Sobald das Rad wieder auf dem Untergrund greift, stellt sich von selbst, aufgrund der wiederhergestellten mechanischen Kopplung der Räder, eine Drehzahl ein, die zumindest im Wesentlichen der Referenz-Solldrehzahl entspricht oder innerhalb eines Toleranzbandes liegt. Der Steuereingriff kann dann aufgehoben werden, bzw. wird von selbst aufgehoben, da keine relevante Soll-Ist-Abweichung der Drehzahl mehr besteht. In einer besonderen Ausgestaltung ist die Regel-Solldrehzahl grösser als die Referenz-Solldrehzahl. Dies hat folgenden Effekt: Sobald das Rad wieder Traktion hat, wird der entsprechende Antriebsstrang zumindest näherungsweise auf die Referenz-Solldrehzahl abgebremst, die kleiner als die Regel-Solldrehzahl ist. Die Drehzahlregelung versucht, dies durch eine Erhöhung des entsprechenden Fahrhydraulik-Teilvolumenstroms zu kompensieren, so lange, bis beispielsweise das verstellbare Drosselorgan wieder vollständig geöffnet ist. Damit ist der erfolgte Regeleingriff aufgehoben.

Es kann vorgesehen sein, dass ein verstellbares Drosselorgan in einem parallel geschalteten Strömungsweg angeordnet ist, in dem eine Vorderrad-Antriebseinheit angeordnet ist. Es kann vorgesehen sein, dass ein verstellbares Drosselorgan in jedem parallel geschalteten Strömungsweg angeordnet ist, in dem eine Vorderrad-Antriebseinheit angeordnet ist. Es kann weiterhin vorgesehen sein, dass ein verstellbares Drosselorgan ausschliesslich in demjenigen oder in denjenigen parallel geschalteten Strömungswegen angeordnet ist, in dem oder in denen Vorderrad-Antriebseinheiten angeordnet sind. Mit anderen Worten, in denjenigen hydraulisch parallel geschalteten Strömungswegen oder in demjenigen hydraulisch parallel geschalteten Strömungsweg, in dem eine Hinterrad-Antriebseinheit angeordnet ist, ist gemäss einer Ausgestaltung des beschriebenen Gegenstandes kein verstellbares Drosselorgan angeordnet. In einer anderen Ausgestaltung des beschriebenen Gegenstandes ist in jedem parallel angeordneten Strömungsweg, in dem eine Rad-Antriebseinheit angeordnet ist, ein verstellbares Drosselorgan mit der jeweiligen Rad-Antriebseinheit in Reihe geschaltet oder mit der Rad-Antriebseinheit in Reihe schaltbar. Beispielsweise kann in dem parallel angeordneten Strömungsweg, in dem eine Hinterrad-Antriebseinheit angeordnet ist, ein verstellbares Drosselorgan fest hydraulisch verschaltet sein. Es kann auch vorgesehen sein, dass das verstellbare Drosselorgan dem Strömungsweg einer Hinterrad-Antriebseinheit in Reihe zuschaltbar ist. So kann vorgesehen sein, dass eine schaltbare Bypass-Schaltung für das im parallel geschalteten Strömungsweg einer Hinterrad-Antriebseinheit angeordnete verstellbare Drosselorgan angeordnet ist, und es ermöglicht ist, ein Hydraulikfluid entweder wahlweise ausschliesslich durch das verstellbare Drosselorgan der Hinterrad-Antriebseinheit zu- oder von dieser abzuführen, oder, zusätzlich oder alternativ, eine zur Umgehung des verstellbaren Drosselorgans angeordnete Umgehungsleitung freizugeben. Damit ist ein Betrieb ermöglicht, bei dem in einem Allrad-Betriebsmodus, in dem sowohl die Hinterräder als auch antreibbare Vorderräder angetrieben werden, in dem parallel geschalteten Strömungsweg einer Hinterrad-Antriebseinheit ein verstellbares Drosselorgan in Reihe mit der Hinterrad-Antriebseinheit durchströmt wird, und somit eine Drosselung des Volumenstroms der Hinterrad-Antriebseinheit möglich ist, während in einem Betriebsmodus, in dem ausschliesslich das Hinterrad bzw. die Hinterräder angetrieben werden, das einer Hinterrad Antriebseinheit zu- oder von dieser abströmende Hydraulikfluid über die Umgehungsleitung dieses verstellbare Drosselorgan umgehen kann. Die genannten Drosselorgane sind dabei, wie erwähnt, innerhalb eines hydraulisch parallel geschalteten Strömungswegs mit der entsprechenden Antriebseinheit in Reihe geschaltet. Insbesondere ist vorgesehen und durch die genannte hydraulische Schaltung sichergestellt, dass jedes verstellbare Drosselorgan ausschliesslich von dem Hydraulikfluid-Teilvolumenstrom durchströmt wird, der einer Rad-Antriebseinheit eines einzigen Antriebsstrangs zu- oder von dieser abströmt. Damit wird durch ein Verstellen eines verstellbaren Drosselorgans selektiv auf den Teilvolumenstrom einer Rad-Antriebseinheit und damit auf die Drehzahlen an einem einzigen Rad-Antriebsstrang eingewirkt.

Demgemäss ist gemäss einer Ausgestaltung des beschriebenen Verfahrens eine Volumenstromregelung ausschliesslich für die Fahrhydraulik-Teilvolumenströme von Vorderrad-Antriebseinheiten oder den Fahrhydraulik-Teilvolumenstrom der Vorderrad-Antriebseinheit vorgesehen. In anderen Ausgestaltungen ist eine Volumenstromregelung für alle Fahrhydraulik-Teilvolumenströme, also die der Vorderrad- wie auch der Hinterrad-Antriebseinheiten, vorgesehen. Im Falle, dass mehrere Vorderrad-Antriebseinheiten in einer Fahr-Hydraulikanordnung angeordnet sind, bzw. der Fahrhydraulik-Volumenstrom die Fahrhydraulik-Teilvolumenströme mehrerer Vorderrad-Antriebseinheiten umfasst, ist vorgesehen, dass ein Steuereingriff auf jeden Fahrhydraulik-Teilvolumenstrom einer Vorderrad-Antriebseinheit erfolgen kann. Insbesondere ist vorgesehen, dass ein Steuereingriff auf den Fahrhydraulik-Teilvolumenstrom einer Rad-Antriebseinheit jedes Antriebsstrangs getrennt erfolgt. Demnach kann vorgesehen sein, dass ein aktiver Eingriff auf jeweils einen Fahrhydraulik-Teilvolumenstrom für einen Antriebsstrang gezielt und abhängig von einer Soll-Ist-Abweichung der Drehzahl im Antriebsstrang jedes Rades einzeln erfolgt.

Gemäss weiterer Aspekte des vorliegend beschriebenen Rad-Strassenfertigers umfasst die Fahr-Hydraulikanordnung eine Fahrpumpe. Die Fahrpumpe ist beispielsweise als Verstellpumpe mit variablem Verdrängervolumen ausgestaltet, und weiterhin derart, dass sie in zwei Förderrichtungen betreibbar ist bzw. betrieben werden kann. Derart kann der Fahrhydraulik-Volumenstrom bei konstanter Antriebsdrehzahl und -richtung der Fahrpumpe variiert und gegebenenfalls umgekehrt werden. Gemäss einer spezifischeren Ausgestaltung ist die Fahr-Hydraulikanordnung mit der Fahrpumpe als hydraulisch geschlossener Kreis ausgebildet. Demgemäss wird der Fahrhydraulik-Volumenstrom von einer Fahrpumpe und insbesondere in einem geschlossenen Kreislauf bereitgestellt. Die Fahrpumpe und die Rad-Antriebseinheiten werden insbesondere in einem geschlossenen Hydraulikkreis betrieben. Bei einem Betrieb im geschlossenen Kreislauf ist die Fahrhydraulikpumpe hydraulisch eingespannt. Im Schiebebetrieb des Fertigers kann die Pumpe daher bei gleicher Fluid-Strömungsrichtung motorisch betrieben werden und so, aufgrund Ihrer Kopplung mit einem Antriebsaggregat, Leistung aufnehmen und als Bremse dienen. In diesem Fall ist die Fahr-Hydraulikanordnung also derart ausgestaltet, dass das Hydraulikfluid aus den Antriebseinheiten wieder der Pumpe zuströmt. Es wird als bekannt vorausgesetzt, dass auch ein geschlossener Hydraulikkreis Tankanschlüsse und eine Speisepumpe umfassen kann. Über einen Tankanschluss können Leckagen ausgeglichen werden; weiterhin kann ein Überschuss an Hydraulikfluid abgelassen werden oder umgekehrt zusätzliches Hydraulikfluid in den geschlossenen Kreislauf einströmen. Diese Notwendigkeit kann sich zum Beispiel bei einer Verstellung des Hubvolumens einer im geschlossenen Kreislauf angeordneten Pumpe oder Antriebseinheit ergeben.

In weiteren beispielhaften Ausgestaltungen des beschriebenen Rad-Strassenfertigers umfasst die Fahr-Hydraulikanordnung wenigstens ein Schaltorgan, mittels dem die Durchströmung wenigstens eines der parallel geschalteten Strömungswege zu- und abschaltbar ist. Damit ist es ermöglicht, die Fluidverbindung zu der Vorderrad-Antriebseinheit oder zu den Vorderrad-Antriebseinheiten zu unterbrechen, und den gesamten Fahrhydraulik-Volumenstrom der Hinterrad-Antriebseinheit oder den Hinterrad-Antriebseinheiten zuzuführen. Somit kann der Rad-Strassenfertiger wahlweise mit ausschliesslichem Hinterradantrieb oder mit zusätzlich angetriebenen Vorderrädern betrieben werden. Bei ausschliesslichem Hinterradantrieb steht der gesamte Fahrhydraulik-Volumenstrom der Antriebseinheit oder den Antriebseinheiten des Hinterrads oder der Hinterräder zur Verfügung, womit bei maximalem Volumenstrom der Fahrpumpe eine grössere Geschwindigkeit ermöglicht ist. Bei einer Verschiebefahrt kann der Rad-Strassenfertiger somit mit ausschliesslichem Hinterradantrieb und somit mit einer grösseren maximalen Fahrgeschwindigkeit betrieben werden. Hingegen kann beim Belagseinbau, wo eine grössere Zugkraft bei gleichzeig geringerer Fahrgeschwindigkeit gefordert ist, das Antriebsdrehmoment auf alle antreibbaren Räder verteilt werden. Dabei ist selbstverständlich die Geschwindigkeit bei gleichem Fahrhydraulik-Volumenstrom gegenüber dem reinen Hinterradantrieb geringer, da der Fahrhydraulik-Volumenstrom auf eine grössere Anzahl von Antriebseinheiten verteilt wird.

Es kann weiterhin eine hydraulische Schaltung vorgesehen sein, mit der eine äussere hydraulische Verbindung zwischen den Fluidanschlüssen einer Rad-Antriebseinheit, die in einem abschaltbaren Strömungsweg angeordnet ist, unter Umgehung der Rad-Antriebseinheit selbst herstellbar ist. Es ist demnach ermöglicht, eine Kurzschluss- oder Leerlaufschaltung einer Antriebseinheit herzustellen, die vom Fahrhydraulik-Volumenstrom entkoppelt ist. Somit ist es ermöglicht, dass Hydraulikfluid frei durch die Antriebseinheit eines geschleppten Rades zirkuliert. Es kann weiterhin eine Schaltung vorgesehen sein, die es ermöglicht, dass die Fluidanschlüsse einer im Leerlauf befindlichen Rad-Antriebseinheit drucklos geschaltet werden. Es ist damit ermöglicht, dass ein geschlepptes Rad mitsamt seiner Antriebseinheit frei drehen kann. Selbstverständlich ist innerhalb der entsprechenden Schaltung ein Hydraulik-Schaltorgan vorgesehen, mit der diese hydraulische Kurzschlussschaltung bzw. eine Fluidverbindung, über die die Fluidanschlüsse drucklos geschaltet werden können, dann unterbrochen wird, wenn die entsprechende Antriebseinheit mit dem Fahrhydraulik-Volumenstrom in Fluidverbindung steht.

In einer weiteren Ausgestaltung weist der Rad-Strassenfertiger an jeder Seite wenigstens zwei antreibbare Räder auf. In bestimmten Ausgestaltungen des Rad-Strassenfertigers sind die Rad-Antriebseinheiten aller antreibbaren Räder auf einer Seite des Fertigers in einer gemeinsamen Fahr-Hydraulikanordnung angeordnet, und eine Rad-Antriebseinheit für jedes antreibbare Rad ist innerhalb der Fahr-Hydraulikanordnung in einem separaten parallel geschalteten Strömungsweg angeordnet. Es kann weiterhin vorgesehen sein, dass der Rad-Strassenfertiger wenigstens zwei voneinander getrennte Fahr-Hydraulikanordnungen aufweist, wobei eine erste Fahr-Hydraulikanordnung Antriebseinheiten ausschliesslich für die antreibbaren Räder der rechten Seite umfasst und eine zweite Fahr-Hydraulikanordnung Antriebseinheiten ausschliesslich für die antreibbaren Räder der linken Seite umfasst. Insbesondere umfassen die erste und die zweite Fahr-Hydraulikanordnung jeweils eine separate Fahrpumpe, wobei weiterhin insbesondere jede Hydraulik-Fahranordnung mit der zugehörigen Pumpe einen geschlossenen Hydraulikkreis ausbildet. Weiterhin kann vorgesehen sein, dass eine Fahr-Hydraulikanordnung die Rad-Antriebseinheiten aller antreibbaren Räder auf einer Seite des Fertigers umfasst. Es kann vorgesehen sein, dass jede Fahr-Hydraulikanordnung Rad-Antriebseinheiten für genau ein Hinterrad und genau ein oder mehrere, insbesondere genau zwei, Vorderräder umfasst.

Das beschriebene Verfahren zum Betrieb eines Rad-Strassenfertigers kann demgemäss umfassen, alle antreibbaren Räder an einer Seite des Strassenfertigers in einer gemeinsamen Fahr-Hydraulikanordnung zu betreiben, derart, dass ein Fahrhydraulik-Volumenstrom in parallelen Teilströmen durch die Rad-Antriebseinheiten aller antreibbaren Räder auf einer Seite des Strassenfertigers strömt.

Das beschriebene Verfahren zum Betrieb eines Rad-Strassenfertigers kann demgemäss weiterhin umfassen, jeweils einen separaten Fahr-Hydraulikvolumenstrom für die Rad-Antriebseinheiten der auf der rechten Seite des Strassenfertigers angeordneten antreibbaren Räder und der auf der linken Seite des Strassenfertigers angeordneten antreibbaren Räder bereitzustellen.

Es kann eine hydraulische Verbindung zwischen der ersten und der zweiten Fahr-Hydraulikanordnung vorgesehen sein. Diese umfasst gemäss weiteren Ausgestaltungen ein Drosselorgan sowie ein Hydraulik-Schalt- oder Stellorgan, mit dem diese Verbindung unterbrochen werden kann. Diese Verbindung hat wiederum die Funktion eines hydraulischen Differentials zwischen den antreibbaren Rädern auf der rechten und der linken Seite des Rad-Strassenfertigers. Beispielsweise können auf diese Weise Toleranzen der von den Fahrpumpen geförderten Volumenströme ausgeglichen werden, und ebenso unterschiedliche Volumenstromanforderungen, beispielsweise aufgrund unterschiedlicher Reifenluftdrücke und/oder Abnutzungen, und daraus resultierender unterschiedlicher Abrollumfänge der auf der rechten und der linken Seite des Fertigers angeordneten Räder. Wenn zum Beispiel bei einer Kurvenfahrt des Fertigers die Räder an beiden Seiten unterschiedlich schnell drehen müssen, und demnach die Antriebseinheiten der Räder auf der kurveninneren Seite einen geringeren Volumenstrom durchzusetzen vermögen als es aufgrund der Fahrgeschwindigkeit der Fall wäre, so kann über die genannte hydraulische Verbindung Hydraulikfluid von der Fahr-Hydraulikanordnung der kurveninneren Räder zu der Fahr-Hydraulikanordnung der kurvenäusseren Räder strömen, wodurch die kurvenäusseren Räder schneller angetrieben werden als es aufgrund des Fahrhydraulik-Volumenstroms der Fahrpumpe für die kurvenäusseren Räder möglich wäre. Dieses Gleichgewicht stellt sich, wiederum aufgrund der mechanischen Kopplung aller angetriebenen Räder, selbsttätig ein. Somit ist eine behinderungsfreie Kurvenfahrt ermöglicht. Es kann weiterhin vorgesehen sein, bei Kurvenfahrt die von den Fahrpumpen der beiden Hydraulikanordnungen geförderten Volumenströme unterschiedlich einzustellen, derart, dass eine Fahrpumpe der Hydraulikanordnung zum Antrieb der kurvenäusseren Räder einen grösseren Volumenstrom fördert als die Fahrpumpe der Hydraulikanordnung für den Antrieb der kurveninneren Räder. Insbesondere kann vorgesehen sein, dass für die Rad-Antriebseinheiten der Räder an der kurvenäusseren Seite ein grösserer Volumenstrom gefördert wird als für die gewählte Fahrgeschwindigkeit des Fertigers notwendig, während für die Rad-Antriebseinheiten der Räder an der kurveninneren Seite ein kleinerer Volumenstrom gefördert wird als für die gewählte Fahrgeschwindigkeit des Fertigers notwendig. Diese unterschiedliche Einstellung kann beispielsweise abhängig von einem Lenkwinkel erfolgen. Auch in diesem Fall können aufgrund der hydraulischen Differentialwirkung verbleibende Toleranzen ausgeglichen werden. Das Drosselorgan in der Verbindungsleitung ermöglicht dabei, unterschiedliche Traktionsverhältnisse der auf beiden Seiten des Fertigers angeordneten Räder innerhalb gewisser Grenzen zu kompensieren. Bei stark unterschiedlichen Traktionsverhältnissen kann vorgesehen sein, die Fluidverbindung zwischen den beiden Fahr-Hydraulikanordnungen mittels des Schalt- oder Stellorgans zu unterbrechen oder stärker zu drosseln und somit die Differentialwirkung zwischen den Rädern auf der rechten und der linken Seite des Fertigers aufzuheben oder zu verringern. Dies kann durch manuelle Steuereingriffe oder automatisiert erfolgen.

Es kann vorgesehen sein, dass der Rad-Strassenfertiger vier Räder umfasst, wobei die Fahr-Hydraulikanordnung oder die Fahr-Hydraulikanordnungen derart schaltbar ist oder sind, um es zu ermöglichen, entweder nur die Hinterräder oder alle vier Räder anzutreiben. Es kann vorgesehen sein, dass der Rad-Strassenfertiger sechs Räder umfasst, wobei auf jeder Seite des Fertigers ein antreibbares Vorderrad angeordnet ist, und die Fahr-Hydraulikanordnung oder die Fahr-Hydraulikanordnungen es ermöglicht, entweder nur die Hinterräder oder alle vier antreibbaren Räder anzutreiben. Es kann vorgesehen sein, dass der Rad-Strassenfertiger sechs Räder umfasst, wobei alle Räder antreibbar sind, und wobei die Fahr-Hydraulikanordnung es ermöglicht oder die Fahr-Hydraulikanordnungen es ermöglichen, entweder nur die Hinterräder oder alle sechs Räder anzutreiben. Es kann vorgesehen sein, dass der Rad-Strassenfertiger sechs Räder umfasst, wobei die Fahr-Hydraulikanordnung es ermöglicht oder die Fahr-Hydraulikanordnungen es ermöglichen, entweder nur die Hinterräder, alle sechs Räder, oder ein Paar der antreibbaren Vorderräder anzutreiben und ein Paar der antreibbaren Vorderräder geschleppt im Leerlauf zu belassen. Auch andere Konfigurationen sind im Rahmen der vorliegenden Offenbarung ermöglicht. Es kann sich als vorteilhaft erweisen, wenn antreibbare Räder auf beiden Seiten des Fertigers paarweise angetrieben werden, und insbesondere jeweils zwei Räder, die eine gemeinsame Achse ausbilden.

In einer Ausgestaltung des Rad-Strassenfertigers umfasst ein Rad-Antriebsstrang wenigstens eine Rad-Antriebseinheit, beispielsweise genau eine Rad-Antriebseinheit, und ein mit der Rad-Antriebseinheit mechanisch gekoppeltes Rad. An wenigstens einem Rad-Antriebsstrang ist eine Drehzahl-Erfassungseinrichtung angeordnet, um eine Ist-Drehzahl in dem Rad-Antriebsstrang zu erfassen. Die Drehzahl-Erfassungseinrichtung kann ein Drehzahlsensor sein. Ebenso kann beispielsweise eine Messeinrichtung zur Erfassung des einer Rad-Antriebseinheit zufliessenden Fahrhydraulik-Teilvolumenstroms angeordnet sein, da dieser, bei konstantem Verdrängervolumen einer Rad-Antriebseinheit, mit der Raddrehzahl korreliert ist. Die Drehzahl wird somit indirekt bestimmt. Beispielsweise kann der Druckverlust über eine im Strömungsweg des Fahrhydraulik-Teilvolumenstroms angeordnete Blende gemessen werden. Selbstverständlich ist diese Aufzählung nicht abschliessend. Die Drehzahl-Erfassungseinrichtung ist weiterhin mit einer Steuervorrichtung verbunden, welche Steuervorrichtung dazu ausgelegt und konfiguriert ist, die Ist-Drehzahl in einem Rad-Antriebsstrang mit einer Soll-Drehzahl für den Rad-Antriebsstrang zu vergleichen und in Abhängigkeit von einer Abweichung der Soll- und Ist-Drehzahlen eine Stellgrösse für ein mit einer Rad-Antriebseinheit des genannten Antriebsstrangs in Reihe geschaltetes verstellbares Drosselorgan bereitzustellen. Die Soll-Drehzahl kann in diesem Falle die Referenz-Solldrehzahl und/oder eine von der Referenz-Solldrehzahl abweichende Regel-Solldrehzahl sein, auf die der Antriebsstrang eines traktionslosen Rades eingeregelt wird, wie es oben beschrieben wurde. Beispielsweise kann eine Abweichung von der Referenz-Solldrehzahl einen Eingriff auf die Volumenstromsteuerung initiieren, die Drehzahl wird nachfolgend aber auf eine von der Referenz-Solldrehzahl abweichende Solldrehzahl eingeregelt.

Insbesondere ist die Steuereinheit dazu ausgestaltet und konfiguriert, um in Verbindung mit der beschriebenen Fahr-Hydraulikanordnung ein weiterhin offenbartes Verfahren auszuführen.

Gemäss bestimmten Aspekten des Verfahrens kann vorgesehen sein, eine Referenz-Solldrehzahl bzw. ein Referenz-Sollverhältnis der Drehzahlen verschiedener Rad-Antriebsstränge unter bestimmten Bedingungen zu ermitteln. So kann beispielsweise ein Maschinenführer bei der Fahrt auf einer asphaltierten Strecke, wobei mit vollständiger Traktion gerechnet werden kann, eine Kalibrationsanweisung geben, woraufhin die Steuerung bestimmte Referenzwerte für die Drehzahlen verschiedener Antriebsstränge bzw. Referenz-Sollverhältnisse der Drehzahlen untereinander ermittelt und abspeichert. Ebenso kann beispielsweise vorgesehen sein, die Referenz-Solldrehzahlen bzw. ein Referenz-Sollverhältnis der Drehzahlen untereinander immer dann zu ermitteln, wenn der Strassenfertiger im reinen Hinterradantrieb betrieben wird. Gemäss weiteren Ausgestaltungen des Verfahrens wird die Referenz-Solldrehzahl oder ein Referenz-Sollverhältnis der genannten Drehzahlen untereinander dynamisch bestimmt. Dabei kann mittels geeigneter mathematischer Verfahren und Algorithmen beispielsweise bestimmt werden, bei welchen Drehzahlverhältnissen die geringste Anzahl an Steuereingriffen auf einen Fahrhydraulik-Teilvolumenstrom erforderlich ist. Hieraus ergibt sich ein selbstlernendes System. Die im Rahmen der beispielhaften Kalibrationen bestimmte Referenz-Solldrehzahl kann weiterhin jeweils auf bestimmte Betriebsparameter, wie eine bestimmte Geschwindigkeit, einen bestimmten Lenkwinkel und/oder dergleichen, bezogen sein. Auch andere Methoden zur Bestimmung der Referenzwerte sind denkbar.

Mittels der genannten Kalibrationen werden Veränderungen der Soll-Drehzahlen oder des Referenz-Soll-Verhältnisses der Drehzahlen untereinander, wie sie sich beispielsweise aufgrund unterschiedlicher Reifendrücke und Reifenabnutzungen ergeben, ausgeglichen.

Die Referenz-Solldrehzahl kann als Absolutwert vorgegeben sein bzw. bestimmt werden. Gemäss weiterer Beispiele wird eine Referenz-Solldrehzahl an einem Rad-Antriebsstrang bestimmt, indem die Ist-Drehzahl an einem Referenz-Antriebsstrang herangezogen und die Referenz-Solldrehzahlen anderer Antriebsstränge unter Berücksichtigung der entsprechenden Referenz-Soll-Drehzahlverhältnisse und gegebenenfalls eines Lenkwinkels berechnet wird.

Gemäss einer beispielhaften Ausführungsform der beschriebenen Gegenstände wird die Drehzahl an einem Hinterrad-Antriebsstrang als Referenz herangezogen, unter der Annahme, dass ein Antriebsschlupf aufgrund des Durchmesserverhältnisses der Räder und/oder der Achslastverteilung stets zuerst an einem Vorderrad auftritt. Es versteht sich, dass diese Ausführungsform besonders dann geeignet ist, wenn auf den Fahrhydraulik-Teilvolumenstrom des Hinterrades nicht mittels eines mit der entsprechenden Rad-Antriebeinheit in Reihe geschalteten verstellbaren Drosselorgans eingegriffen werden soll und von einer stets besten Traktion am Hinterrad ausgegangen wird, so, dass stets auf die Drehzahl am Hinterrad-Antriebsstrang referenziert werden kann.

Gemäss einer weiteren beispielhaften Ausführungsform, bei der die Fahrhydraulik-Teilvolumenströme aller in der Hydraulikanordnung angeordneten Rad-Antriebseinheiten mittels eines mit der jeweiligen Rad-Antriebseinheit in Reihe geschalteten verstellbaren Drosselorgans steuerbar bzw. drosselbar sind bzw. bedarfsweise mittels des genannten Drosselorgans gesteuert werden sollen, wird wie folgt verfahren: Es werden Ist-Drehzahlen an allen Antriebssträngen erfasst, deren Rad-Antriebseinheiten in einer gemeinsamen Hydraulikanordnung angeordnet sind. Solange sich das Verhältnis aller Ist-Drehzahlen zueinander innerhalb eines Toleranzbereichs bewegt, wird nichts unternommen. Wenn nun Abweichungen der Drehzahlen an einzelnen Antriebssträngen festgestellt werden, so wird ein Antriebsstrang oder die Antriebsstränge, dessen oder deren Ist-Drehzahl im Vergleich zu seiner oder ihrer Referenz-Solldrehzahl am geringsten ist, als Referenz-Antriebsstrang herangezogen. Beispielsweise kann, wenn Ist-Drehzahlen aller Antriebsstränge bekannt sind, fortlaufend ausgehend von jeder Ist-Drehzahl und Referenz-Soll-Drehzahlverhältnissen der Antriebsstränge untereinander, eine einer Ist-Drehzahl an einem Antriebsstrang zugeordnete erwartete Drehzahl jedes anderen Antriebsstrangs bestimmt werden. Ebenso könnten Ist-Drehzahlverhältnisse aller Antriebsstränge untereinander bestimmt werden. Wenn sich alle Räder in Traktion befinden, werden die die einzelnen Ist-Drehzahlen der Antriebsstränge innerhalb enger Grenzen mit den ausgehend von den anderen Ist-Drehzahlen erwarteten Drehzahlen der Antriebsstränge übereinstimmen, und/oder die Drehzahlverhältnisse aller Antriebsstränge untereinander werden sich innerhalb enger Grenzen um die jeweiligen Referenz-Soll-Drehzahlverhältnisse bewegen. In diesem Falle ist kein Regeleingriff notwendig. Ergeben sich hingegen Abweichungen ausserhalb gewisser Toleranzbereiche, so deutet dies auf ungleichmässige Traktion hin. Es kann nun der Antriebsstrang oder ein Antriebsstrang, dessen Ist-Drehzahl im Verhältnis zu einer oder jeder erwarteten Drehzahl für diesen Antriebsstrang, die ausgehend von der Ist-Drehzahl an einem anderen Antriebsstrang ermittelt wird, am kleinsten ist, oder dessen Ist-Drehzahlverhältnis zu einem anderen Antriebsstrang im Vergleich zum entsprechenden Referenz-Soll-Drehzahlverhältnis am kleinsten ist, als Referenz-Antriebsstrang herangezogen werden. Es ist davon auszugehen, dass, solange überhaupt noch Traktion besteht, eben das Rad des Antriebsstrangs, der im Verhältnis zu allen anderen Antriebssträngen - unter Berücksichtigung der unterschiedlichen Rad-Abrollumfänge und gegebenenfalls eines Lenkwinkels oder von Lenkwinkeln - am langsamsten dreht, noch am meisten Traktion aufweist. Mit anderen Worten wird der Antriebsstrang ermittelt, an dem das Rad die geringste Rad-Abrollgeschwindigkeit aufweist. Nachfolgend werden die Referenz-Solldrehzahlen für alle weiteren Antriebsstränge ausgehend von der Ist-Drehzahl am Referenz-Antriebsstrang festgelegt. Ausgehend hiervon passiert beim Durchdrehen eines Rades folgendes: Die weiteren Räder werden verlangsamt, da die Rad-Antriebseinheit des durchdrehenden Rades einen grösseren Fahrhydraulik-Teilvolumenstrom schluckt. Daraufhin wird der Antriebsstrang eines langsameren, also noch mit einer äusseren Last beaufschlagten und daher noch in Traktion befindlichen, Rades, als Referenz-Antriebsstrang herangezogen. Von einer Ist-Drehzahl an diesem Antriebsstrang ausgehend werden nun die Referenz-Solldrehzahlen für die anderen Antriebsstränge festgelegt. Daraufhin wird mittels des entsprechenden verstellbaren Drosselorgans oder mittels der entsprechenden verstellbaren Drosselorgane die Fahrhydraulik-Teilvolumenströme des schneller drehenden Antriebsstrangs oder der schneller drehenden Antriebsstränge reduziert. In Folge steigt die Drehzahl am Referenz-Antriebsstrang an. Damit ergeben sich höhere Referenz-Solldrehzahlen für die anderen Antriebsstränge. Dieser Vorgang wird fortgesetzt, wobei die Referenz-Solldrehzahlen an den Antriebssträngen ansteigen, während die Ist-Drehzahlen derjenigen Antriebsstränge, bei denen auf den Hydraulik-Teilvolumenstrom einer entsprechenden Rad-Antriebseinheit eingewirkt wird, kleiner werden. Damit wird die Abweichung zwischen den Referenz-Soll-Drehzahlen und den Ist-Drehzahlen an den schneller drehenden Antriebssträngen fortwährend kleiner, bis alle Antriebsstränge Drehzahlen aufweisen, die einer entsprechenden Regel-Solldrehzahl des jeweiligen Antriebsstrangs entsprechen. Wie oben bereits dargelegt wurde, können die Regel-Soll-Drehzahlen an den Antriebssträngen der durchdrehenden Räder durchaus, insbesondere aus regelungstechnischen Gründen, von der Referenz-Solldrehzahl abweichen, können diesen gemäss anderer beispielhafter Ausgestaltungen aber auch entsprechen. In jedem Falle ist damit sichergestellt, dass für die Antriebseinheit oder die Antriebseinheiten derjenigen Räder, die die stärkste Traktion auf dem Untergrund aufweisen, ein Fahrhydraulik-Teilvolumenstrom zur Verfügung steht, der einen weiteren ordnungsgemässen Antrieb des Rad-Strassenfertigers ermöglicht.

Die Steuervorrichtung kann eine elektronische Steuervorrichtung sein, welche die genannten Eingangsgrössen erfasst, verrechnet, und bedarfsweise ein Stellsignal für das verstellbare Drosselorgan zur Verfügung stellt.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine Draufsicht auf einen stark schematisierten Rad-Strassenfertiger;
- Fig. 2: ein vereinfachtes Hydraulik-Schaltschema einer Fahr-Hydraulikanordnung der beschriebenen Art in einer Schaltstellung für ausschliesslichen Hinterradantrieb;
- Fig. 3: das Hydraulik-Schaltschema aus der Figur 2 in einer Schaltstellung für zusätzlichen Vorderradantrieb.

Die Zeichnungen sind stark schematisiert. Nicht für das Verständnis der beschriebenen Gegenstände notwendige Einzelheiten sind weggelassen worden. In den Zeichnungen symbolisieren gestrichelt dargestellte Linien oder Pfeile Signalleitungen oder Signalflüsse. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

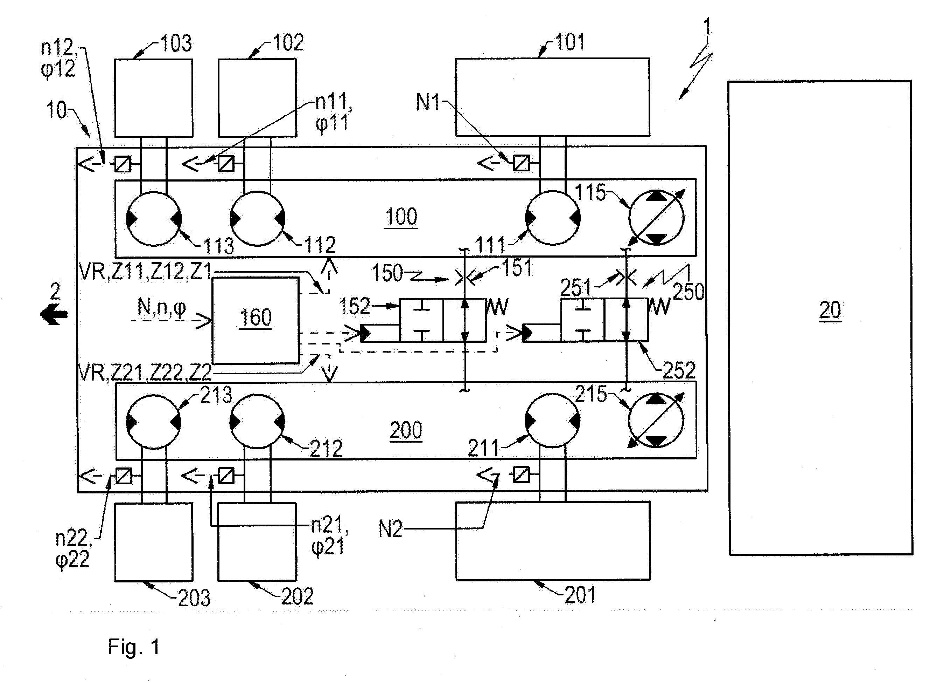

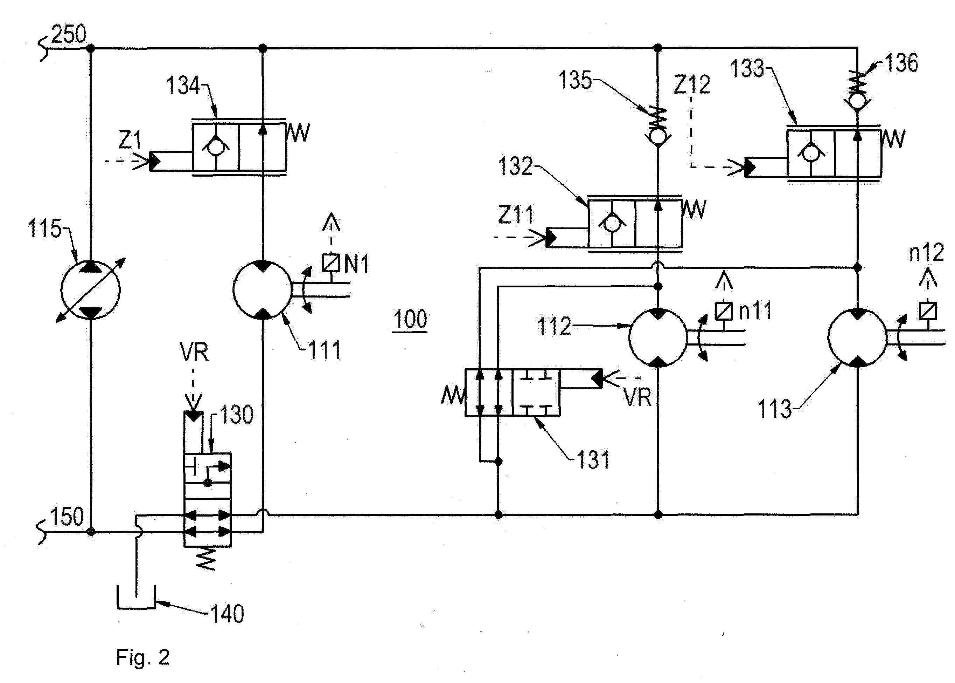

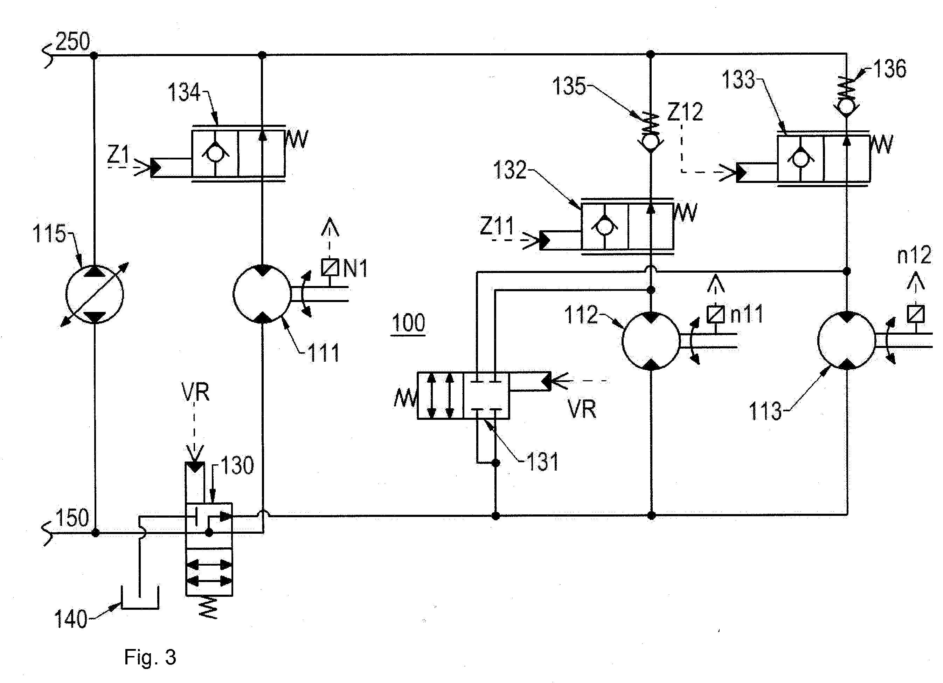

In der Figur 1 ist in einer stark schematisierten Ansicht eine Draufsicht auf einen beispielhaften Rad-Strassenfertiger 1 dargestellt. Der Strassenfertiger 1 umfasst eine Zugmaschine 10, sowie eine Bohle 20. Die Bohle 20 ist mittels nicht dargestellter, dem Fachmann aber geläufiger, Zugarme mit der Zugmaschine 10 verbunden. Die Vorwärtsfahr- und Arbeitsrichtung des Fertigers ist durch den Pfeil bei 2 gekennzeichnet. Die Zugmaschine 10 soll einerseits in der Lage sein, schnell zwischen zwei Einsatzorten verschoben zu werden, auf der anderen Seite aber auch genügend zu Kraft aufzubringen, um die Bohle 20 während eines Einbauvorgangs über das Einbaugut zu schleppen. Die Zugmaschine des Rad-Strassenfertigers umfasst antreibbare Räder 101, 102 und 103 auf der rechten Seite des Strassenfertigers, sowie antreibbare Räder 201, 202 und 203 auf der linken Seite des Fertigers. Die Hinterräder 101 und 201 sind deutlich grösser ausgeführt als die Vorderräder 102, 103, 202 und 203. Jedes der Hinterräder ist mit einer hydrostatischen Hinterrad-Antriebseinheit 111 und 211 gekoppelt. Jedes der antreibbaren Vorderräder ist mit einer Vorderrad-Antriebseinheit 112, 113, 212 bzw. 213 gekoppelt. Die Kopplung der antreibbaren Räder mit den Rad-Antriebseinheiten kann beispielsweise über jeweils ein zwischengeschaltetes Getriebe erfolgen. Jedes Rad bildet mit der zugehörigen Rad-Antriebseinheit und gegebenenfalls weiteren damit gekoppelten Komponenten einen Antriebsstrang. Alle Rad-Antriebseinheiten 111, 112 und 113 der auf der rechten Seite des Fertigers angeordneten antreibbaren Räder sind in einer ersten Fahr-Hydraulikanordnung 100 angeordnet. Alle Rad-Antriebseinheiten 211, 212 und 213 für die antreibbaren Räder der linken Seite sind in einer zweiten Fahr-Hydraulikanordnung 200 angeordnet. Details der Fahr-Hydraulikanordnungen 100 und 200 sind in dieser Darstellung weggelassen worden und werden im Zusammenhang mit den Figuren 2 und 3 näher erläutert. Die Fahr-Hydraulikanordnungen ermöglichen beispielsweise das Zu-und Abschalten des Antriebs der Vorderräder. Die erste Fahr-Hydraulikanordnung 100 umfasst eine Fahrpumpe 115, die die in der ersten Fahr-Hydraulikanordnung angeordneten Rad-Antriebseinheiten für die rechte Seite des Fertigers mit einem Fahrhydraulik-Volumenstrom versorgt. Die zweite Fahr-Hydraulikanordnung 200 umfasst eine Fahrpumpe 215, die die in der zweiten Fahr-Hydraulikanordnung angeordneten Rad-Antriebseinheiten für die linke Seite des Fertigers mit einem Fahrhydraulik-Volumenstrom versorgt. Beide Fahrpumpen sind auf eine in der vorliegenden Darstellung nicht ersichtlichen, dem Fachmann aber geläufigen, Weise in einem geschlossenen Kreislauf mit den jeweiligen Rad-Antriebseinheiten geschaltet. Dabei strömt Hydraulikfluid von einer Hochdruckseite der jeweiligen Fahrpumpe zu den Rad-Antriebseinheiten, und wird zu einer Niederdruckseite der jeweiligen Fahrpumpe zurückgeleitet. Je nach Fahrtrichtung des Fertigers ändert sich dabei, welcher Anschluss der Fahrpumpe die Hochdruckseite und welche die Niederdruckseite darstellt. Es versteht sich weiterhin, dass im Schiebebetrieb des Fertigers, beispielsweise bei der Bergabfahrt, in dem die Antriebseinheiten als Pumpen arbeiten und die Fahrpumpen motorisch betrieben werden, die Druckverhältnisse sich umkehren, so, dass der höhere Druck an der stromaufwärtigen Saugseite der Pumpe und der niedrigere Druck an der stromabwärtigen Förderseite der Pumpe zu liegen kommt. Nachfolgend wird bezüglich der Nomenklatur vereinfacht stets von den Druckverhältnissen ausgegangen, die sich ergeben, wenn die Fahrpumpe als Pumpe betrieben wird und mittels eines geförderten Fahrhydraulik-Volumenstroms die Rad-Antriebseinheiten antreibt. Mit anderen Worten, es wird vereinfacht stets die Seite der Fahrpumpe, zu der das Fluid von der Fahrpumpe aus strömt, als die Hochdruckseite bezeichnet, und es wird stets die Seite der Pumpe, an der Hydraulikfluid in die Pumpe einströmt, als Niederdruckseite bezeichnet. Zwei Verbindungsleitungen 150 und 250 verbinden die beiden Fahr-Hydraulikanordnungen 100 und 200. Dabei verbindet eine der Verbindungsleitungen diejenigen Seiten der Fahrpumpen, die bei Vorwärtsfahrt die Hochdruckseiten der Fahrpumpen sind, und die andere Verbindungsleitung verbindet diejenigen Seiten der Fahrpumpen, die bei Rückwärtsfahrt die Hochdruckseite der jeweiligen Fahrpumpen sind. In den Verbindungsleitungen 150 und 250 sind Drosselorgane 151 und 251 sowie jeweils ein Schaltorgan 152 bzw. 252 angeordnet. Die Schaltorgane 152 und 252 sind im vorliegenden Beispiel als unstetig schaltende 2/2-Wegeventile ausgestaltet, welche in einem nicht geschalteten Zustand eine Fluidverbindung zwischen der ersten Fahr-Hydraulikanordnung 100 und der zweiten Fahr-Hydraulikanordnung 200 herstellen und diese im geschalteten Zustand unterbrechen. Die Fahrpumpen 115 und 215 fördern zumindest bei Geradeausfahrt wenigstens näherungsweise identische Fahrhydraulik-Volumenströme. Alle Räder des Fertigers sind, sofern sie volle Traktion haben, also mit dem Untergrund in Reibschluss stehen, über den Untergrund miteinander gekoppelt. Damit sind auch die Drehzahlen der Rad-Antriebseinheiten zueinander festgelegt. Das heisst, es ist festgelegt, welcher Teilvolumenstrom durch jede mit dem Fahrhydraulik-Volumenstrom beaufschlagt Rad-Antriebseinheit fliesst. Über wenigstens eine der Verbindungsleitungen 150 und 250 kann Hydraulikfluid zwischen den beiden Fahr-Hydraulikanordnungen fliessen. Damit wird ein Ausgleich dafür geschaffen, wenn die Fahrpumpen 115 und 215 beispielsweise aufgrund von Toleranzen oder Leckagen unterschiedliche Volumenströme fördern, oder aufgrund von unterschiedlichen Reifendrücken und/oder-abnutzungen unterschiedliche Abrollumfänge der Räder vorliegen, aber auch bei der Fahrt auf unebenem Untergrund. Weiterhin kann bei Kurvenfahrt, wenn die kurveninneren Räder langsamer drehen als die kurvenäusseren Räder, Hydraulikfluid von der Fahr-Hydraulikanordnung der kurveninneren Räder zur Fahr-Hydraulikanordnung der kurvenäusseren Räder strömen, soweit dies nicht durch eine unterschiedliche Steuerung der Volumenströme der Fahrpumpen auf beiden Seiten des Fertigers vollständig kompensiert ist. Auf diese Weise wirken die Verbindungsleitungen 150 und 250 als Differential. Die Schaltorgane 152 und 252 ermöglichen gegebenenfalls die vollständige Unterbrechung der Fluidverbindung zwischen den beiden Fahr-Hydraulikanordnungen 100 und 200. Somit wird durch die Schaltorgane 152 und 252 die Differentialwirkung aufgehoben. An den Antriebssträngen der Hinterräder sind Messvorrichtungen angeordnet, welche Drehzahlen N1 und N2 und gegebenenfalls weitere Grössen am jeweiligen Hinterrad-Antriebsstrang erfassen. An den Antriebssträngen der Vorderräder sind Messeinrichtungen angeordnet, welche unter anderem eine Drehzahl n11, n12, n21 und n22 am jeweiligen Vorderrad-Antriebsstrang sowie Lenkwinkel ϕ11, ϕ12, ϕ21 und ϕ22 der Vorderräder erfassen. Da die Lenkwinkel korreliert sind, genügt prinzipiell auch die Erfassung eines einzigen Lenkwinkels.

Diese kann anstatt direkt an den Rädern beispielsweise auch an einer Betätigungsvorrichtung für die Lenkung erfolgen. Die gemessenen individuellen Drehzahlen N und n an den Antriebssträngen sowie die Lenkwinkel ϕ der einzelnen antreibbaren Vorderräder werden an eine Steuervorrichtung 160 weitergegeben. Die Steuervorrichtung 160 ist derart aufgebaut und konfiguriert, dass sie ausgehend von einer Referenzgrösse und den Lenkwinkeln Referenz-Solldrehzahlen aller antreibbaren Räder des Fertigers berechnen kann. Als Referenzgrösse kann beispielsweise die gemessene Drehzahl an einem Hinterrad-Antriebsstrang oder die gemessene Ist-Drehzahl an einem als Referenz-Antriebsstrang herangezogenen Antriebsstrang dienen. Wenn die Drehzahlen der Hinterrad-Antriebsstränge stärker differieren, als es ausgehend vom Lenkwinkel der Fall sein sollte, so kann dies auf den Traktionsverlust eines der Hinterräder zurückzuführen sein. In diesem Falle kann die Steuervorrichtung 160 ein Steuersignal, gekennzeichnet durch die gestrichelten Linien zwischen der Steuervorrichtung 160 und den Schaltorganen 152 und 252, an die Schaltorgane 152 und 252 ausgeben und so die Fluidverbindung zwischen den Fahr-Hydraulikanordnungen 100 und 200 unterbrechen, um dergestalt die Differentialwirkung aufzuheben. Es kann in weiteren Ausgestaltungen vorgesehen sein, dass die Schaltorgane 152 und 252 Proportional-Wegeventile sind, derart, dass die Differentialwirkung zwischen den links und rechts angeordneten Rädern variabel ausgestaltet werden kann. Anstelle der beiden als 2/2-Wegeventile ausgestalteten Schaltorgane 152 und 252 kann beispielsweise auch ein einzelnes 4/2-Wegeventil angeordnet sein. Es kann vorgesehen sein, dass die Steuervorrichtung 160 die Differentialwirkung zwischen den Rädern auf der rechten und der linken Seite ebenfalls auf eine Bedienereingabe hin aufhebt. Es ist weiterhin vorgesehen, dass die Steuervorrichtung mittels eines Steuersignals VR auf wenigstens ein innerhalb einer Fahr-Hydraulikanordnung angeordnetes Schaltelement wirkt, um die Fahr-Hydraulikanordnung derart umzuschalten, dass entweder nur das entsprechende Hinterrad oder zusätzlich wenigstens eines der antreibbaren Vorderräder angetrieben wird. Die Steuervorrichtung 160 ist weiterhin derart ausgestaltet und konfiguriert, um gegebenenfalls mittels Steuersignalen Z1, Z11 und Z12 bzw. Z2, Z21 und Z22 auf einstellbare Drosselorgane innerhalb der Fahr-Hydraulikanordnungen 100 und 200 zu wirken, mit denen ein Fahrhydraulik-Teilvolumenstrom einer Rad-Antriebseinheit eines einzelnen Rad-Antriebsstrangs drosselbar ist. Dies wird nachfolgend anhand einer in den Figuren 2 und 3 dargestellten beispielhaften Fahr-Hydraulikanordnung näher erläutert.

Figur 2 zeigt eine beispielhafte Fahr-Hydraulikanordnung 100. Die Fahrpumpe 115 und die Rad-Antriebseinheiten 111, 112 und 113 sind in einem geschlossenen hydraulischen Kreis angeordnet. Es ist dem Fachmann ohne weiteres geläufig, dass ein derartiger hydraulischer Kreis eine Vielzahl weiterer Komponenten umfassen kann, wie zum Beispiel Organe zu Absicherung gegen Überdruck, eine Leckergänzungspumpe, Hydraulikfluid-Kühler und dergleichen. Die detaillierte Ausgestaltung eines geschlossenen hydraulischen Kreises wird als bekannt vorausgesetzt, weshalb vorliegend stark vereinfacht nur die für das Verständnis der beschriebenen Gegenstände notwendigen Einzelheiten dargestellt sind. Es versteht sich, dass beide Fahr-Hydraulikanordnungen 100 und 200 des Rad-Strassenfertigers aus der Figur 1 bevorzugt identisch aufgebaut sind. An beiden Seiten der als Verstellpumpe für einen bei konstanter Antriebsdrehzahl und Antriebsrichtung variablen und umkehrbaren Volumenstrom ausgeführten Fahrpumpe 115 zweigen die oben beschriebenen Verbindungsleitungen 150 und 250 ab, über die eine Fluidverbindung mit der zweiten Fahr-Hydraulikanordnung 200 ermöglicht ist. Die Fahrpumpe ermöglicht es, den geförderten Volumenstrom bei konstanter Pumpendrehzahl zu variieren und somit die Antriebsgeschwindigkeit des Fertigers zu steuern. Ebenso kann die Fahrpumpe das Hydraulikfluid in zwei Richtungen fördern, derart, dass ohne ein separates Umschaltorgan zwischen Vorwärtsfahrt und Rückwärtsfahrt gewechselt werden kann. Jede der Rad-Antriebseinheiten 111, 112 und 113 ist in einem hydraulisch parallel geschalteten Strömungsweg angeordnet. Innerhalb der parallel geschalteten Strömungswege der Rad-Antriebseinheiten 111, 112 und 113 ist jeweils ein 2/2-Wege-Proportionalventil 132, 133 bzw. 134 als verstellbares Drosselorgan mit der jeweiligen Rad-Antriebseinheit hydraulisch in Reihe geschaltet. Prinzipiell kann auch vorgesehen sein, dass eines oder mehrere der dargestellten verstellbaren Drosselorgane anstatt, wie im vorliegenden Ausführungsbeispiel, stromab der entsprechenden Rad-Antriebseinheit stromauf von dieser geschaltet ist. In der in Figur 2 dargestellten Schaltstellung ist die Fahr-Hydraulikanordnung derart geschaltet, dass nur die Hinterrad-Antriebseinheit 111 mit einem Fahrhydraulik-Volumenstrom beaufschlagt wird, und dementsprechend von den Rädern des Strassenfertigers aus der Figur 1, deren Rad-Antriebseinheiten in der Fahr-Hydraulikanordnung 100 angeordnet sind, nur das Hinterrad 101 angetrieben wird. Beim Betrieb mit ausschliesslichem Hinterradantrieb kann der Strassenfertiger sowohl rückwärts als auch vorwärts betrieben werden. Beim Betrieb mit ausschliesslichem Hinterradantrieb ist das verstellbare Drosselorgan 134 wirkungslos, da zwangsläufig der gesamte von der Pumpe 115 geförderte Fahrhydraulik-Volumenstrom die Hinterrad-Antriebseinheit 111 durchströmen muss. Es kann in diesem Falle auch eine Schaltung vorgesehen sein, bei der bei ausschliesslichem Hinterradantrieb das verstellbare Drosselorgan 134 umgangen wird. Bei Vorwärtsfahrt ist derjenige Anschluss der Fahrpumpe 115 die Hochdruckseite, an der die Verbindungsleitung 150 abzweigt. Bei Rückwärtsfahrt ist derjenige Anschluss der Fahrpumpe 115 die Hochdruckseite, an der die Verbindungsleitung 250 abzweigt. Zur Umschaltung zwischen dem Betrieb mit ausschliesslichem Hinterradantrieb und dem Betrieb mit Hinterradantrieb und zusätzlichen Vorderradantrieb dient das Umschaltorgan 130, welches als 4/2-Wege-Schaltventil ausgeführt ist. In der vorliegenden Darstellung ist das Umschaltorgan 130 nicht geschaltet, und gibt ausschliesslich einen Strömungsweg von der Pumpe 115 zur Hinterrad-Antriebseinheit frei. Das Umschaltorgan 130 ist über ein Steuersignal VR von der in Figur 1 dargestellten Steuervorrichtung 160 schaltbar. Eine Strömung von der Pumpe zu den Vorderrad-Antriebseinheiten 112 und 113 ist aufgrund der gezeigten Stellung des Umschaltorgans 130 sowie der Rückschlagorgane 135 und 136 unterbunden. Das Umschaltorgan 130 gibt in der vorliegend dargestellten Stellung weiterhin einen Strömungsweg zwischen den Vorderrad-Antriebseinheiten 112 und 113 und einem Tank 140 frei. Ein weiteres als 4/2-Wegeventil ausgestaltetes Schaltorgan 131 ist ebenfalls über das Steuersignal VR synchron mit dem Schaltorgan 130 schaltbar. In der dargestellten, nicht geschalteten Stellung verbindet das Schaltorgan 131 beide Fluidanschlüsse der Vorderrad-Antriebseinheiten 112 und 113 über eine äussere Bypass-Verbindung, und gleichzeitig, via dem Umschaltorgan 130, mit dem Tank 140. Auf diese Weise ist durch das Schaltorgan 131 in der dargestellten nicht geschalteten Stellung eine Kurzschluss- oder Leerlaufschaltung der Vorderrad-Antriebseinheiten hergestellt, und Hydraulikfluid kann bedarfsweise frei um und durch die Vorderrad-Antriebseinheiten zirkulieren. Gleichzeitig sind die Vorderrad-Antriebseinheiten durch die Verbindung mit dem Tank 140 drucklos geschaltet. Beim ausschliesslichen Hinterradantrieb sollen die antreibbaren Vorderräder des Fertigers mit möglichst geringem Widerstand durch Abrollen mitgeschleppt werden. Die Vorderrad-Antriebseinheiten können demzufolge als Pumpen wirken. Durch die beschriebene Leerlaufschaltung wird vermieden, dass die Vorderrad-Antriebseinheiten in diesem Fall gegen einen hydraulischen Druckwiderstand arbeiten müssen. Ebenso sind Bauarten von hydrostatischen Antriebsmotoren bekannt, deren Verdränger federbelastet sind, derart, dass sie erst durch einen auf sie wirkenden Arbeitsdruck mit der Abtriebswelle des Antriebsmotors gekoppelt werden, und so in einem drucklosen Leerlaufzustand in Ruhe verbleiben können. Die Verdränger sind bei der genannten Bauart aufgrund der Verbindung mit dem Tank drucklos geschaltet und somit vollständig von der Drehbewegung des Antriebsstrangs entkoppelt. Die nicht angetriebenen antreibbaren Vorderräder können im Leerlauf frei bzw. mit geringem Widerstand drehen.

In der Darstellung der Figur 3 sind die Schaltorgane 130 und 131 durch ein von der Steuervorrichtung 160 generiertes Signal VR geschaltet. Das Schaltorgan 130 gibt einen Strömungsweg zwischen der Pumpe 115, der Hinterrad-Antriebseinheit 111, und den Vorderrad-Antriebseinheiten 112 und 113 frei. Das Schaltorgan 131 sperrt die Leerlaufschaltung der Vorderrad-Antriebseinheiten 112 und 113. Der Anschluss zum Tank 140 ist durch das Schaltorgan 130 ebenfalls abgesperrt. Ein von der Pumpe 115 erzeugter Fahrhydraulik-Volumenstrom wird in drei parallele Fahrhydraulik-Teilvolumenströme für die hydraulisch parallel geschalteten Rad-Antriebseinheiten 111, 112 und 113 aufgeteilt. Aufgrund dieser Tatsache steht für jede Rad-Antriebseinheit ein geringerer maximaler Fahrhydraulik-Teilvolumenstrom zur Verfügung, und die maximale Fahrgeschwindigkeit des Strassenfertigers ist entsprechend geringer als bei ausschliesslichem Hinterradantrieb. In dieser Schaltstellung der Schaltorgane 130 und 131 ist ausschliesslich ein Betrieb in einer Strömungsrichtung sinnvoll, bei der die Pumpe das Fluid zum Schaltorgan 130 fördert, derart, dass das Schaltorgan 130 bzw. die Verbindungsleitung 150 auf der Hochdruckseite der Pumpe oder stromab der Pumpe zu liegen kommt. Aufgrund der Rückschlagorgane 135 und 136 würden beim Betrieb in der umgekehrten Förderrichtung in der gezeigten Schaltstellung die Vorderrad-Antriebseinheiten hydraulisch blockiert. Dabei sind die Rad-Antriebseinheiten derart angeordnet und geschaltet, dass der Rad-Strassenfertiger bei dieser Fördervorrichtung der Pumpe in der in Figur 1 dargestellten Vorwärtsrichtung 2 angetrieben wird. Dies ist auch insofern sinnvoll, als der Betrieb mit angetriebenen Vorderrädern einen Arbeitsgang mit erhöhter Traktion darstellt, in dem die Bohle über das Einbaugut geschleppt wird, woraus ein erhöhter Zugkraftbedarf resultiert. Bei der Rückwärtsfahrt hingegen befindet sich der Fertiger in einem Transportgang, in dem der genannte erhöhte Zugkraftbedarf nicht vorliegt und der Antrieb über die Hinterräder ausreichend ist. Im Gegenzug erspart die Anordnung der Rückschlagorgane die Anordnung wenigstens eines weiteren Schaltorgans, das bei Rückwärtsfahrt und ausschliesslichem Hinterradantrieb die Vorderrad-Antriebseinheiten vom Hydraulikkreis entkoppelt. Wie bereits mehrfach erwähnt, sind bei voller Traktion aller Räder, das heisst, alle Räder stehen mit dem Untergrund, auf dem der Fertiger fährt, in Reibschluss, alle Räder und somit alle Antriebseinheiten mechanisch miteinander gekoppelt. Die Verhältnisse der Drehzahlen und damit der Teilvolumenströme aller Rad-Antriebseinheiten 111, 112 und 113 zueinander sind demnach festgelegt, ändern sich aber beispielsweise bei Kurvenfahrt aufgrund der unterschiedlichen Radien, auf denen sich die Räder bewegen. Beispielsweise wird bei Kurvenfahrt ein nicht gelenktes Hinterrad gegenüber einem gelenkten Vorderrad abgebremst. Aufgrund der Anordnung der Rad-Antriebseinheiten in parallel geschalteten Strömungswegen vermag die Fahr-Hydraulikanordnung dies selbsttätig und ohne Steuereingriff auszugleichen und bildet somit ein hydraulisches Differential zwischen den innerhalb der Fahr-Hydraulikanordnung in Parallelschaltung angeordneten Antriebseinheiten. Über geeignete Messeinrichtungen an den Rad-Antriebssträngen kann jeweils eine Drehzahl N1 am Hinterrad-Antriebsstrang mit der Hinterrad-Antriebseinheit 111 sowie eine Drehzahl n11 und eine Drehzahl n12 an jedem der Vorderrad-Antriebsstränge mit den Vorderrad-Antriebseinheiten 112 und 113 bestimmt und an die in Figur 1 dargestellte Steuervorrichtung 160 weitergeleitet werden. Wenn gleichzeitig die Rad-Abrollumfänge der Vorderräder und der Hinterräder bekannt sind, kann jeweils ein Referenz-Sollwert für die Verhältnisse der Drehzahlen n11, n12 und N1 zueinander berechnet werden, der sich einstellt, wenn alle Räder Traktion haben, das heisst, wenn alle Räder Haftreibung auf dem Untergrund aufweisen. Damit ist es auch möglich, wenn ein Rad-Antriebsstrang referenziert wird, ausgehend von der an diesem gemessenen Drehzahl Referenz-Solldrehzahlen aller anderen Räder zu bestimmen. Wie oben beschrieben, ist es auch möglich, unter Referenzbedingungen Kalibrationsläufe für die Drehzahlen an den Antriebssträngen, bzw. deren Verhältnis zueinander, durchzuführen, beispielsweise unter Bedingungen, unter denen von einer vollständigen Traktion auszugehen ist, oder es können geeignete Algorithmen zur Bestimmung der Referenzwerte herangezogen werden. Dergestalt kalibriert sich die Steuereinheit selbst. Eine Berücksichtigung eines Lenkwinkels bei der Bestimmung der Referenz-Solldrehzahlen bzw. der Referenz-Sollverhältnisse der Drehzahlen zueinander trägt dem Umstand Rechnung, dass sich die Räder bei Kurvenfahrt mit unterschiedlichen Bahngeschwindigkeiten auf unterschiedlichen Kurvenradien bewegen. Stellt die Steuereinheit fest, dass eine der Drehzahlen an einem der Rad-Antriebsstränge im Verhältnis zu einer Drehzahl an einem anderen Rad-Antriebsstrang zu hoch ist, wird dies als Traktionsverlust des entsprechenden Rades gewertet. Wenn zum Beispiel das Rad 102 des Fertigers aus der Figur 1 Traktion verliert, sinkt der äussere Widerstand der Antriebseinheit 112. Das Hydraulikfluid strömt bevorzugt durch denjenigen parallelgeschalteten Strömungsweg, in dem der geringste Strömungswiderstand vorherrscht, also denjenigen mit der Antriebseinheit 112, oder, allgemeiner gesprochen, durch denjenigen parallelgeschalteten Strömungsweg, in dem eine Antriebseinheit angeordnet ist, die gegen den geringsten äusseren Widerstand arbeitet. In der Folge erhöht sich die Drehzahl n11 an dem Vorderrad-Antriebsstrang mit der Antriebseinheit 112. Es wird also ein grösserer Teilvolumenstrom des Fahrhydraulik-Volumenstroms durch den parallel geschalteten Strömungsweg mit der Antriebseinheit 112 durchgesetzt. Die Steuervorrichtung registriert den Anstieg der Ist-Drehzahl n11. Wenn die Ist-Drehzahl n11 am Vorderrad-Antriebsstrang mit der Antriebseinheit 112 die entsprechende Referenz-Solldrehzahl um mehr als eine bedarfsweise festzulegende Toleranz überschreitet, generiert die Steuervorrichtung ein Stellsignal Z11 für das verstellbare Drosselorgan 132, das innerhalb des parallel geschalteten Strömungswegs der Antriebseinheit 112 in einer Reihenschaltung mit der Antriebseinheit 112 angeordnet ist. Auf diese Weise wird der Volumenstrom, der die Antriebseinheit 112 durchströmt, gedrosselt, und die Drehzahl n11 des entsprechenden Vorderrad-Antriebsstrangs abgefangen und auf eine Regel-Solldrehzahl eingeregelt, die entweder der Referenz-Solldrehzahl entspricht oder geringfügig darüber oder darunter liegt. Auf diese Weise wird erreicht, dass für die Rad-Antriebseinheiten 111 und 113, deren angetriebene Räder nach wie vor Traktion haben, wieder, im Rahmen selbstverständlich auftretender Toleranzen, zumindest im Wesentlichen die gleichen Fahrhydraulik-Teilvolumenströme zur Verfügung stehen als würde das Rad 102 nicht durchdrehen. Beim Traktionsverlust des Rades 103 wird auf analoge Weise auf das verstellbare Drosselorgan 133 eingewirkt. Beim Traktionsverlust des Rades 101 wird auf analoge Weise auf das verstellbare Drosselorgan 134 eingewirkt. Es versteht sich, dass zur Durchführung dieser Regelung des Fahrhydraulik-Teilvolumenstroms für die Rad-Antriebseinheit eines durchgehenden Rades auf einen Parameter referenziert werden muss, damit eine Referenz-Solldrehzahl bestimmt werden kann. Dies kann einerseits ein Parameter sein, der die Fahrgeschwindigkeit abbildet. Gemäss einer Ausführungsform des Verfahrens wird davon ausgegangen, dass das Hinterrad aufgrund des grösseren Durchmessers und der Achslastverteilung nicht durchdreht. In diesem Falle wird auf eine Regelung des Fahrhydraulik-Teilvolumenstroms der Hinterrad-Antriebseinheit 111 verzichtet. Die Referenz-Solldrehzahlen an den Vorderrad-Antriebssträngen werden ausgehend von der Ist-Drehzahl an Hinterrad-Antriebsstrang bestimmt. Das verstellbare Drosselorgan 134 kann in diesem Falle auch weggelassen werden. Gemäss einer anderen Variante der Volumenstrom-Regelung wird auf die Drehzahl an einem Antriebsstrang referenziert, bei dem, ausgehend von einem Referenz-Solldrehzahlverhältnis, gegebenenfalls unter Berücksichtigung des Lenkwinkels, die geringste Umfangsgeschwindigkeit am Abrollumfang des daran angeordneten Rades bestimmt wird. So können beispielsweise die Verhältnisse aller Drehzahlen n11, n12, und N1 relativ zueinander ausgewertet und mit den Referenz-Verhältnissen verglichen werden. Dreht bei diesem Vergleich eines der Räder im Vergleich zu den anderen Rädern zu langsam, kann davon ausgegangen werden, dass dieses Rad noch Traktion hat, während die anderen Räder einen Traktionsverlust erlitten haben. Dreht eines der Räder im Vergleich zu den anderen Rädern zu schnell, kann davon ausgegangen werden, dass dieses Rad einen Traktionsverlust erlitten hat, während die anderen Räder noch Traktion haben. Es wird auf eine Drehzahl eines relativ am langsamsten drehenden Antriebsstrangs, also des Antriebsstrangs, an dem unter Berücksichtigung des Lenkwinkels die geringste Abroll-Umfangsgeschwindigkeit des daran angeordneten Rades vorliegt, referenziert, und von diesem ausgehend die Referenz-Solldrehzahl eines vergleichsweise zu schnell drehenden Rades bestimmt. Auf die beschriebene Weise können somit die Fahrhydraulik-Teilvolumenströme derart eingeregelt werden, dass die Abroll-Umfangsgeschwindigkeiten an den Rädern wieder- allenfalls unter Berücksichtigung eines Lenkwinkels und daraus folgender unterschiedlicher Bahngeschwindigkeiten der Räder- wenigstens näherungsweise gleich sind. Auf diese Weise wirken die verstellbaren Drosselorgane 132, 133 und 134 wie hydraulische Differentialsperren zwischen den Rädern, deren Antriebseinheiten in der Fahr-Hydraulikanordnung 100 angeordnet sind. Im vorliegenden Falle sind dies die Räder 101, 102 und 103 auf der rechten Seite des in der Figur 1 dargestellten Fertigers; für die Räder 201, 202 und 203 auf der linken Seite Fertigers wird der Antrieb bei Traktionsverlust auf vollkommen analoge Weise mit der Hydraulikanordnung 200 geregelt. Wenn das durchdrehende Rad wieder Traktion hat, wird das entsprechende Drosselorgan wieder vollständig geöffnet. Die Drehzahlen in den Antriebssträngen können sich dann wieder selbsttätig aufgrund der mechanischen Kopplung über den Untergrund aufeinander einspielen. Verschiedene Möglichkeiten, das Wiederherstellen der Traktion zu detektieren, wurden oben bereits erwähnt. Die Ausführung und die Regelparameter der Drehzahlregelung können vom Fachmann aufgrund seines Fachwissens und gegebenenfalls aufgrund von Versuchen ermittelt und beispielsweise durch eine entsprechende Programmierung der Steuervorrichtung 160 realisiert werden.

Die Bestimmung der Referenz-Solldrehzahlen kann, wie bereits erwähnt, statisch aufgrund der Radumfänge und unter Berücksichtigung eines Lenkwinkels erfolgen. Die Referenz-Solldrehzahlen können beispielsweise auch auf der Grundlage von Kalibrationsläufen festgelegt werden, wodurch beispielsweise der Effekt unterschiedlich aufgepumpter oder abgenutzter Reifen berücksichtigt werden kann. Der Toleranzbereich, ausserhalb dessen die Volumenstromregelung aktiv wird, kann dann entsprechend kleiner gewählt werden. Ebenso ist es möglich, dass die Steuervorrichtung die Referenz-Solldrehzahlen dynamisch bestimmt, indem mittels geeigneter mathematischer Verfahren und Algorithmen eine Drehzahl bestimmt wird, bei der die Regelung am seltensten und/oder mit geringster Amplitude eingreifen muss. Diese Aufzählung von Beispielen ist selbstverständlich nicht abschliessend, und auch andere Möglichkeiten zur Bestimmung der Referenz-Solldrehzahlen oder Referenz-Soll-Drehzahlverhältnisse sind im Rahmen der vorliegend beschriebenen technischen Lehre umsetzbar.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

### BEZUGSZEICHENLISTE

- 1: Rad-Strassenfertiger
- 2: Vorwärtsfahrtrichtung, Arbeitsrichtung
- 10: Zugmaschine
- 20: Bohle
- 100: Fahr-Hydraulikanordnung
- 101: antreibbares Hinterrad
- 102: antreibbares Vorderrad
- 103: antreibbares Vorderrad
- 111: Hinterrad-Antriebseinheit
- 112: Vorderrad-Antriebseinheit
- 113: Vorderrad-Antriebseinheit
- 115: Fahrpumpe
- 130: Schaltorgan, Wegeventil
- 131: Schaltorgan, Wegeventil
- 132: verstellbares Drosselorgan, Proportional-Wegeventil
- 133: verstellbares Drosselorgan, Proportional-Wegeventil
- 134: verstellbares Drosselorgan, Proportional-Wegeventil
- 135: Rückschlagorgan
- 136: Rückschlagorgan
- 140: Tank
- 150: Verbindungsleitung
- 151: Drosselorgan
- 152: Schaltorgan, Wegeventil
- 160: Steuervorrichtung
- 200: Fahr-Hydraulikanordnung
- 201: antreibbares Hinterrad
- 202: antreibbares Vorderrad
- 203: antreibbares Vorderrad
- 211: Hinterrad-Antriebseinheit
- 212: Vorderrad-Antriebseinheit
- 213: Vorderrad-Antriebseinheit
- 215: Fahrpumpe
- 250: Verbindungsleitung
- 251: Drosselorgan
- 252: Schaltorgan, Wegeventil
- n, n11, n12, n21, n22: Drehzahl an einem Vorderrad-Antriebsstrang
- N, N1, N2: Drehzahl an einem Hinterrad-Antriebsstrang
- VR: Steuersignal, für die Zuschaltung des Vorderradantriebs
- Z1, Z2, Z11, Z12, Z21, Z22: Steuersignal, für die Volumenstromdrosselung eines Rad-Antriebsmotors
- ϕ, ϕ11, ϕ12, ϕ21, ϕ22: Lenkwinkel

## Patentansprüche

1. Rad-Strassenfertiger (1), der wenigstens zwei antreibbare Räder (101, 102, 103, 201, 202, 203) umfasst, wobei jedes antreibbare Rad mit wenigstens einer Rad-Antriebseinheit (111, 112, 113, 211, 212, 213) gekoppelt ist, und der weiterhin wenigstens eine Fahr-Hydraulikanordnung (100, 200) zum Antrieb des Strassenfertigers umfasst, in der wenigstens zwei Rad-Antriebseinheiten in hydraulischer Parallelschaltung in jeweils einem Strömungsweg angeordnet sind, wodurch wenigstens zwei hydraulisch parallel geschaltete Strömungswege gebildet sind, wobei in wenigstens einem der hydraulisch parallel geschalteten Strömungswege eine Rad-Antriebseinheit (111, 112, 113) und ein verstellbares Drosselorgan (132, 133, 134) in einer Reihenschaltung angeordnet sind und wobei in wenigstens einem der hydraulisch parallel angeordneten Strömungswege eine Hinterrad-Antriebseinheit (111, 211) für ein Hinterrad (101, 201) und in wenigstens einem der hydraulisch parallel angeordneten Strömungswege eine Vorderrad-Antriebseinheit (112, 113, 212, 213) für ein Vorderrad (102, 103, 201, 203) angeordnet ist.

2. Rad-Strassenfertiger gemäss einem der vorstehenden Ansprüche, wobei die Fahr-Hydraulikanordnung (100, 200) eine Fahrpumpe (115, 215) umfasst und mit der Fahrpumpe als hydraulisch geschlossenen Kreis ausgebildet ist.

3. Rad-Strassenfertiger gemäss einem der vorstehenden Ansprüche, wobei die Fahr-Hydraulikanordnung (100) wenigstens ein Schaltorgan (130) umfasst, mittels dem die Durchströmung wenigstens eines der parallel geschalteten Strömungswege zu- und abschaltbar ist.

4. Rad-Strassenfertiger gemäss dem vorstehenden Anspruch wobei weiterhin eine Schaltung vorgesehen ist, mit der eine hydraulische Verbindung zwischen den Fluidanschlüssen einer Rad-Antriebseinheit (112, 113), die in einem abschaltbaren Strömungsweg angeordnet ist, herstellbar ist.

5. Rad-Strassenfertiger gemäss einem der beiden vorstehenden Ansprüche, wobei eine Schaltung vorgesehen ist, mittels der die Fluidanschlüsse einer Rad-Antriebseinheit (112, 113), die in einem abschaltbaren Strömungsweg angeordnet ist, drucklos schaltbar ist.

6. Rad-Strassenfertiger gemäss einem der vorstehenden Ansprüche, wobei der Rad-Strassenfertiger an jeder Seite wenigstens zwei antreibbare Räder aufweist, und der Strassenfertiger wenigstens zwei voneinander getrennte Fahr-Hydraulikanordnungen aufweist, wobei eine erste Fahr-Hydraulikanordnung (100) Antriebseinheiten (111, 112, 113) ausschliesslich für die antreibbaren Räder der rechten Seite (101, 102, 103) umfasst und eine zweite Fahr-Hydraulikanordnung (200) Antriebseinheiten (211, 212, 213) ausschliesslich für die antreibbaren Räder der linken Seite (201, 202, 203) umfasst.

7. Rad-Strassenfertiger gemäss dem vorstehenden Anspruch, wobei die erste und die zweite Fahr-Hydraulikanordnung (100, 200) jeweils eine separate Fahrpumpe (115, 215) umfassen, wobei insbesondere jede Hydraulik-Fahranordnung mit der zugehörigen Pumpe einen geschlossenen Hydraulikkreis ausbildet.

8. Rad-Strassenfertiger gemäss einem der vorstehenden Ansprüche, wobei ein Rad-Antriebsstrang wenigstens eine Rad-Antriebseinheit (111, 112, 113, 211, 212, 213) und ein mit der Rad-Antriebseinheit mechanisch gekoppeltes Rad (101, 102, 103, 201, 202, 203) umfasst, und wobei an wenigstens einem Rad-Antriebsstrang eine Drehzahl-Erfassungseinrichtung angeordnet ist, um eine Ist-Drehzahl (n, n11, n12, n21, n22, N, N1, N2) an dem Rad-Antriebsstrang zu erfassen, und wobei die Drehzahl-Erfassungseinrichtung weiterhin mit einer Steuervorrichtung (160) verbunden ist, welche Steuervorrichtung dazu ausgelegt und konfiguriert ist, die Ist-Drehzahl an dem Rad-Antriebsstrang mit einer Soll-Drehzahl für den Rad-Antriebsstrang zu vergleichen und in Abhängigkeit von einer Abweichung der Soll- und Ist-Drehzahlen eine Stellgrösse (Z1, Z2, Z11, Z12, Z21, Z22) für ein mit einer Rad-Antriebseinheit des Rad-Antriebsstrangs in Reihe geschaltetes verstellbares Drosselorgan (132, 133, 134) bereitzustellen.

9. Verfahren zum Betrieb eines Rad-Strassenfertigers, umfassend
einen gemeinsamen Fahrhydraulik-Volumenstrom für wenigstens eine Vorderrad-Antriebseinheit (112, 113, 212, 213) und wenigstens eine Hinterrad-Antriebseinheit (111, 211) bereitzustellen,
wenigstens ein Vorderrad (102, 103, 202, 203) und ein Hinterrad (101, 201) anzutreiben, indem Fahrhydraulik-Teilvolumenströme durch die Rad-Antriebseinheiten des Vorderrads und des Hinterrads geleitet werden, eine Ist-Drehzahl (N, N1, N2, n, n11, n12, n21, n22) an wenigstens einem Rad-Antriebsstrang zu ermitteln, wobei ein Rad-Antriebsstrang wenigstens eine Rad-Antriebseinheit und ein mit der Rad-Antriebeinheit gekoppeltes Rad umfasst,
eine Referenz-Solldrehzahl für den Rad-Antriebsstrang zu ermitteln, und im Falle einer Abweichung von Ist-Drehzahl und Referenz-Solldrehzahl an einem Rad-Antriebsstrang, die grösser ist als ein Toleranzwert, auf den Fahrhydraulik-Teilvolumenstrom einer entsprechenden Rad-Antriebseinheit des Rad-Antriebsstrangs einzuwirken.

10. Verfahren gemäss dem vorstehenden Anspruch, wobei zur Ermittlung der Referenz-Solldrehzahl wenigstens eine der folgenden Grössen herangezogen wird:
eine Fahrgeschwindigkeit;
ein Rad-Abrollumfang;
ein Lenkwinkel (ϕ, ϕ11, ϕ12, ϕ21, ϕ22).

11. Verfahren gemäss einem der vorstehenden Verfahrensansprüche, umfassend, eine Drehzahl (N, N1, N2) eines Hinterrad-Antriebsstrangs als Referenzdrehzahl heranzuziehen, die Ist-Drehzahl (n, n11, n12, n21, n22) eines Vorderrad-Antriebsstrangs mit der Drehzahl des Hinterrad-Antriebsstrangs zu vergleichen und/oder in Relation zu setzen, und den Fahrhydraulik-Teilvolumenstrom einer Antriebseinheit des Vorderrad-Antriebsstrangs derart einzustellen, dass eine Soll-Differenz oder ein Soll-Verhältnis der genannten Drehzahlen resultiert.

12. Verfahren gemäss einem der vorstehenden Verfahrensansprüche, umfassend, Ist-Drehzahlen an allen Antriebssträngen zu erfassen, einen Antriebsstrang, an dem die Ist-Drehzahl im Verhältnis zu seiner Referenz-Solldrehzahl am kleinsten ist, als Referenz-Antriebsstrang zu heranzuziehen, und die Referenz-Solldrehzahlen für alle weiteren Antriebsstränge ausgehend von der Ist-Drehzahl am Referenz-Antriebsstrang festzulegen.

13. Verfahren gemäss einem der vorstehenden Verfahrensansprüche umfassend, den Fahrhydraulik-Volumenstrom über eine Pumpe (115, 215) bereitzustellen und die Pumpe mit den Rad-Antriebsmotoren (111, 112, 113, 211, 212, 213) in einem geschlossenen Hydraulikkreis zu betreiben.

14. Verfahren gemäss einem der vorstehenden Verfahrensansprüche, umfassend, alle antreibbaren Räder an einer Seite des Strassenfertigers in einer gemeinsamen Fahr-Hydraulikanordnung zu betreiben, derart, dass ein Fahrhydraulik-Volumenstrom parallel durch die Rad-Antriebseinheiten aller antreibbaren Räder auf einer Seite des Strassenfertigers strömt.

15. Verfahren gemäss einem der vorstehenden Ansprüche, umfassend, jeweils einen separaten Fahr-Hydraulikvolumenstrom für die Rad-Antriebseinheiten der auf der rechten und die auf der linken Seite des Strassenfertigers angeordneten antreibbaren Räder bereitzustellen.
